Europäisches Patentamt

European Patent Office

Office européen des brevets

(11) Publication number: **0 257 611 B1**

# EUROPEAN PATENT SPECIFICATION

(45) Date of publication of patent specification: **03.08.94**

(51) Int. Cl.5: **C08K 3/36**, C08L 67/02, C08G 63/80, C08J 5/18

(21) Application number: **87112252.9**

(22) Date of filing: **24.08.87**

The file contains technical information submitted after the application was filed and not included in this specification

(54) **Polyester compositions, process for preparing the same, polyester films, polyester films for magnetic recording media and films for capacitors produced therefrom.**

(30) Priority: **29.08.86 JP 203500/86**
**12.02.87 JP 30393/87**
**03.04.87 JP 82481/87**
**22.05.87 JP 125056/87**
**11.06.87 JP 145752/87**
**12.06.87 JP 146302/87**
**13.06.87 JP 147303/87**
**18.06.87 JP 152222/87**
**18.06.87 JP 152223/87**
**19.06.87 JP 152569/87**
**19.06.87 JP 152570/87**
**22.06.87 JP 155174/87**
**22.06.87 JP 155175/87**
**23.06.87 JP 156214/87**

(43) Date of publication of application:
**02.03.88 Bulletin 88/09**

(45) Publication of the grant of the patent:
**03.08.94 Bulletin 94/31**

(84) Designated Contracting States:
**AT BE CH DE ES FR GB GR IT LI LU NL SE**

(73) Proprietor: **DIAFOIL HOECHST CO., LTD**
**28-10, Hongo 1-chome**
**Bunkyo-ku Tokyo(JP)**

(72) Inventor: **Kagiyama, Takashi**
**1400 Matsumoto**
**Yokkaichi-shi Mie-ken(JP)**
Inventor: **Oguri, Yasuo**
**1-56-4 Gotokuji**
**Setagaya-ku Tokyo(JP)**
Inventor: **Kunugihara, Kazuhiro**
**2-1-130 Akebono**
**Yokkaichi-shi Mie-ken(JP)**
Inventor: **Hattori, Eiji**
**10-305 Machida-Koputaun**
**2-11-3 Ogawa**
**Machida-shi Tokyo(JP)**
Inventor: **Endo, Kazuo**
**3-3 Tsutsujigaoka**
**Midori-ku**
**Yokohama-shi Kanagawa-ken(JP)**
Inventor: **Shudo, Nobuyasu**
**15-1-206 Eda-cho**
**Midori-ku**
**Yokohama-shi Kanagawa-ken(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

(56) References cited:
**EP-A- 0 152 265**
**EP-A- 0 261 430**

**WPI, FILE SUPPLIER, abstract no.**
**AN=80-19356C, Derwent Publications**
**Ltd,London, GB; & JP-B-82 034 088**

**PATENT ABSTRACTS OF JAPAN, vol. 8, no.**
**212 (C-244)[1649], 27th September 1984;& JP-**
**A-59 100 156 (TEIJIN K.K.) 09-06-1984**

Inventor: **Kawaguchi, Chikakazu**
**1063-14 Yamagiwa**
**Atsugi-shi Kanagawa-ken(JP)**
Inventor: **Watanabe, Toshifumi 21 Murata-**
**Manshon**
**6-20 Satsukigaoka**
**Midori-ku**
**Yokohama-shi Kanagawa-ken(JP)**
Inventor: **Meguro, Yoshio**
**14-103 Machida-Koputaun**
**2-10-3 Ogawa**
**Machida-shi Tokyo(JP)**
Inventor: **Fujimoto, Masahiko Mitsubishi-**
**Kasei-Aoba-Ryo**
**5-1 Tsutsujigaoka**
**Midori-ku**
**Yokohama-shi Kanagawa-ken(JP)**
Inventor: **Takisawa, Toshifumi**
**701 Kuresuto-Kaminoge**
**4-39-10 Kaminoge**
**Setagaya-ku Tokyo(JP)**
Inventor: **Inagaki, Masashi**
**17-105 Popuragaoka-Kopu**
**2-17-1 Naruse**
**Machida-shi Tokyo(JP)**
Inventor: **Kato, Kenji Mitsubishi-Kasei-**
**Tachibana-Ryo**
**2-6-3 Tachibanadai**
**Midori-ku**
**Yokohama-shi Kanagawa-ken(JP)**
Inventor: **Komiyama, Megumi Mitsubishi-**
**Kasei-Tachibana-Ryo**
**2-6-3 Tachibanadai**
**Midori-ku**
**Yokohama-shi Kanagawa-ken(JP)**
Inventor: **Utsumi, Shigeo B-311 Mitsubishi-**
**Kasei-Sakuradai-**
**Apato**
**3 Sakuradai**
**Midori-ku**
**Yokohama-shi Kanagawa-ken(JP)**
Inventor: **Tomitaka, Kichinojo 113 Mitsubishi-**
**Kasei-Dai-Ichi**
**Apato**
**5-6 Tsutsujigaoka**
**Midori-ku**
**Yokohama-shi Kanagawa-ken(JP)**
Inventor: **Watanabe, Shigeyuki**
**335 Kariyado**
**Nakahara-ku**
**Kawasaki-shi Kanagawa-ken(JP)**
Inventor: **Akatsu, Kazuyuki Mitsubishi-Kasei-**
**Aoba-Ryo**
**5-1 Tsutsujigaoka**
**Midori-ku**
**Yokohama-shi Kanagawa-ken(JP)**

⑦₄  Representative: **TER MEER - MÜLLER - STEIN-**
     **MEISTER & PARTNER**
     **Mauerkircherstrasse 45**
     **D-81679 München (DE)**

**Description**

BACKGROUND OF THE INVENTION:

The present invention relates to a process for preparing polyester compositions, and polyester films obtained from the compositions. More particularly, the present invention relates to a process for preparing polyester compositions excellent in particle dispersibility in polyester and other properties, and films obtained from such compositions.

Polyester films, especially biaxially stretched polyester films such as polyethylene terephthalate films have excellent physical, chemical and thermal properties and are widely used as fibers, films and other molded articles.

A film property which is generally desired in the production of these films and in handling of the produced films is good slipperiness between the films themselves or between the film and other base material. Poor slipperiness of film in the production process or the steps of after-treatments such as coating and deposition or in handling of the product itself may lead to bad workability and reduced commercial value of the products.

For improving slipping properties of film, it has been generally practised to add fine particles into polyester to provide proper unevenness to the film surface.

As the fine particles used for such purpose, the particles of inorganic compounds inert to polyester such as talc, kaolin, silica, calcium carbonate, titanium dioxide, graphite or carbon black have been employed. However, these inorganic compound particles, which are usually obtained by crushing natural minerals or by syntheses, are difficult to avoid the presence of coarse particles or agglomerates of particles.

If coarse particles are contained in polyester or dispersibility of particles is poor there tends to take place clogging of the filter in the extrusion step or a break of the film. Also, a defect such as fish-eye would be produced in the film, giving rise to the problems such as drop out in magnetic tapes or reduced dielectric strength in capacitors.

Particularly in the field of magnetic tapes, requests for the reduction of size, longer play time and higher image quality are rising. For the attainment thereof, it is necessary to make the unevenness on the film surface more uniform and finer.

To this purpose, it has been proposed to remove coarse particles, before use, from the inert inorganic particles by crushing and classifying the particles. For example, a method is known in which a powder obtained by crushing starting mineral material or a powder obtained from a synthesis is subjected to a dry or wet crushing treatment and then to a dry or wet classifying treatment. This method, however although capable of removing coarse particles to a certain extent, was still unsatisfactory.

Various types of silica particles differing in average diameter are commercially available. However, when film were made by incorporating such silica particles into polyester, the produced films would fail to meet said strict property requirements.

Generally, the finely divided particles having a relatively high surface activity such as silica particles tend to form agglomerate particles and can hardly be dispersed thoroughly in the disperse medium. Also, agglomeration of particles accelerates in the course of preparation of polyester after addition of the fine particles and, as a result, the coarse agglomerate particles are formed in polyester to make the unevenness on the film surface ununiform, resulting in a reduced commercial value of the produced film. Especially in case such film is used as support for magnetic tapes such as deposited tapes or metal tapes, a decrease of output or an increase of drop out of signals would be caused.

EP-A-0 261 430 (document within the meaning of Article 54 (3) EPC) discloses a polyester composition containing spherical silica particles as well as a polyester film consisting of such a polyester composition similar to the present invention. This document, however, does not disclose the use of specific amounts of antimony compounds and/or magnesium compounds as a catalyst when preparing the polyester.

EP-A-0 152 265 discloses a polyester composition containing from 0.01 to 1.0% by weight of silica particles having an average size of 0.01 to 0.5 $\mu$m. The particle size distribution and the method for preparing the silica particles is not described therein.

JP-A-59-171 623 discloses a polyester film containing 0.01-5 % by weight of spherical particles having an average diameter of 0.1-1$\mu$m obtained from colloidal silica.

The Journal of the Japanese Chemical Society, 81, no. 9, page 1503 discloses the preparation of monodispersed spherical silica by the reaction of tetraalkyl orthosilicate in alcoholic solution with water in the presence of ammonia.

EP-A-0 124 291 discloses a biaxially oriented polyester film with improved surface flatness and slipperiness which has a number of minute protrusions on its surface, said protrusions being attributed to fine particles of anatase-type titanium dioxide having a controlled particle size distribution ratio.

As a result of assiduous studies on the dispersibility and possibility of forming coarse agglomerate particles of silica particles in the particle addition method, particularly in the method using silica particles as the particles to be added, the present inventors found that the amorphous fine spherical silica particles obtained by subjecting alkoxysilane to hydrolysis and a condensation reaction by using a specific catalyst have a very narrow particle size distribution, contain no coarse particles, have excellent dispersibility in media such as ethylene glycol and in polyester, and can provide a polyester composition which can be made into a film having a fine and uniform surface roughness with minimized coarse protuberances and also having excellent flatness and slip characteristics. The present invention was attained on the basis of such finding.

## BRIEF DESCRIPTION OF THE DRAWINGS:

FIG. 1 is a schematic illustration of the apparatus for measuring the melt specific resistance.

FIG. 2 is a bottom view of the portion indicated by 6 in FIG. 1.

Each of the numbers 1 to 7 respectively indicates as follows.

1 ... DC high voltage generator and ammeter

2 ... stainless steel bars directly connected to electrodes (5)

3 ... rubber stopper

4 ... Teflon tubes for preventing electrical leak from other parts than electrodes (5)

5 ... electrodes (made of stainless steel)

6 ... Teflon block with bores for fixing electrodes therein

7 ... molten composition

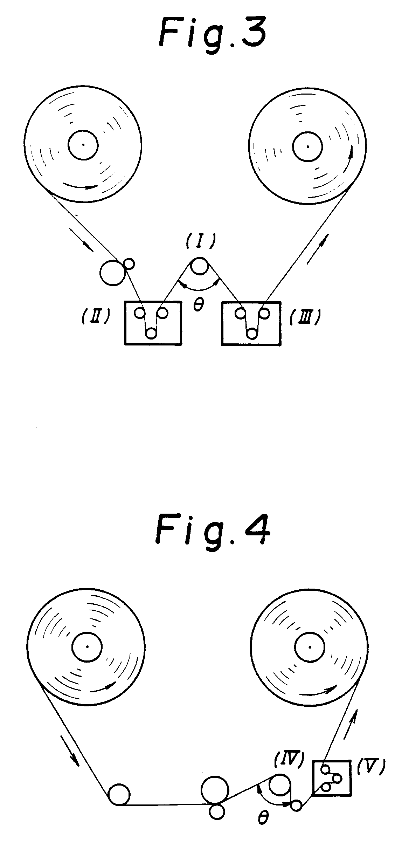

FIG. 3 illustrates a tape running system for evaluating the coefficient of kinetic friction against metals. (I): 6m/m$\phi$ SUS-420-J2 fixed pin; (II): inlet tension meter; (III): outlet tension meter; $\theta$ = 135°.

FIG. 4 illustrates a tape running system for evaluating wear resistance. (IV): 6 m/m$\phi$ SUS-420-J2 fixed pin; (V): tension meter; $\theta$ = 135°.

## DEATAILED DESCRIPTION OF THE INVENTION:

The present invention relates to a process for preparing a polyester composition in which 80 % by mole or more of the constitutional repeating units ot the polyester are constituted by ethylene terephthalate units or ethylene 2,6-naphthalate units and containing spherical silica particles, which comprises

subjecting terephthalic acid or naphthalene-2,6-dicarboxylic acid or esters thereof and ethylene glycol to an esterification reaction,

subjecting the reaction product of said esterification reaction to polycondensation reaction in the presence of antimony (Sb) compounds and/or magnesium (Mg) compounds as a catalyst in an amount defined by the following formulae (4) - (6):

$$0 \leq Sb \leq 1.5 \qquad (4)$$

$$0 \leq Mg \leq 10 \qquad (5)$$

$$0.5 \leq 6Sb + Mg \leq 15 \qquad (6)$$

wherein Sb is the total number of moles of antimony compounds per $10^6$ grams of the polyester, and Mg is the total number of moles of magnesium compounds per $10^6$ grams of the polyester, and

adding said spherical silica particles at any stage till the initial polycondensation reaction is completed, i. e. at a stage at which the Intrinsic viscosity of the reaction product is 0.2 or below, in an amount of 0.001 to 5 % by weight based on the polyester to be produced, said particles being amorphous, being obtained by subjecting alkoxysilane to hydrolysis reaction and condensation reaction in the presence of an amine type catalyst, and having an average diameter of 0.01 to 3.0 $\mu$m, and the diameter dispersion index of said particles represented by the following formula (1) being in the range of 1.1 to 2.7:

$$d_{10}/d_{90} \qquad (1)$$

wherein $d_{10}$ is the diameter of the particle when the cumulative number thereof is 10 % of the total number of said particles, $d_{90}$ is the diameter of the particle when the cumulative number thereof is 90 % of the total number of said particles, and $d_{10}$ and $d_{90}$ are measured under an electron microscope, said cumulative numbers being calculated beginning with the largest particle size.

Further, the present invention relates to a polyester film which contains 0.001 to 5 % by weight, based on the polyester, of spherical silica particles wherein said silica particles have been obtained in the manner indicated above, have an average diameter of 0.01 to 3.0 $\mu$m and a diameter dispersion index represented by formula (1) as mentioned above in the range of 1.1 to 2.7.

The polyester used in the present invention includes polyesters which is obtained by using terephthalic acid, naphthalene-2,6-dicarboxylic acid, or esters thereof and ethylene glycol as main starting materials. These polyesters may contain other material(s) as third constitutional component. As the third constitutional component, there can be used, for example, isophthalic acid as aromatic dicarboxylic acid component, and propylene glycol, tetramethylene glycol, diethylene glycol, neopentylene glycol or cyclohexane dimethanol either singly or in combination as glycol component. Polyalkylene glycol is also usable. In any event, the polyester used in the present invention is the one in which 80% by mole or more of the constitutional repeating units are constituted by ethylene terephthalate units or ethylene-2,6-naphthalate units.

It has been considered that generally polyesters comprising ethylene-2,6-naphthalate units as main repeating units are poor in particle dispersibility as compared with polyethylene terephthalate, but the fine spherical silica particles according to the present invention exhibit excellent dispersibility in such polyesters.

In the present invention, the particles added to be contained in polyester for improving the surface flatness and slipping properties of the produced film are the fine spherical silica particles having an average diameter of 0.01 to 3.0 $\mu$m. The fine spherical silica particles used in the present invention can be obtained by subjecting the starting material alkoxysilane to hydrolysis and a condensation reaction by using an amine type catalyst.

The alkoxysilane used as starting material for the preparation of the fine spherical silica particles may be selected from the alkoxysilane compounds represented by the formula $(C_nH_{2n+1}O)_4Si$ (wherein n is an integer of 1 to 8), the preferred examples thereof being tetramethoxysilane, tetraethoxysilane, tetrapropoxysilane and tetrabutoxysilane. As the catalyst for the hydrolysis and condensation reactions, there can be used ammonia, trimethylamine, tetraethylammonium salt aqueous solution or urea, but an aqueous solution of ammonia is preferred.

The fine spherical silica particles of the present invention can be synthesized, for instance, in the following way. A solution is prepared by dissolving tetramethoxysilane in an alcohol such as methanol (solution A). There is also separately prepared a solution by dissolving water and an aqueous ammonia solution in methanol (solution B). Both solutions are maintained at a predetermined temperature, for example, 20 - 30°C. Solution A is added to solution B under vigorous stirring and the mixture is maintained at a predetermined temperature for several hours, then centrifuged, washed with the solvent alcohol, dried and dispersed in ethylene glycol. It is also possible to employ a method in which ethylene glycol is added to a suspension of fine spherical silica particles obtained after the prescribed reactions, and the mixture is subjected to distillation to remove excess ammonia, alcohol and water.

In either case, it is preferable that the fine spherical silica particles of the present invention be ultimately prepared as a slurry in ethylene glycol.

The concentration of thus prepared fine spherical silica particles in ethylene glycol is preferably not high than 20% by weight, more preferably not higher than 10% by weight, particularly preferably not higher than 5% by weight but not less than 0.5% by weight. If the concentration of the silica particles exceeds 20% by weight, there may take place agglomeration of particles when they are added in the course of the polycondensation reaction. On the other hand, if the particle concentration is less than 0.5% by weight, the amount of ethylene glycol used becomes excess, resulting in a poor economy.

The characteristic features of the fine silica particles according to the present invention obtained from the hydrolysis and condensation reactions of alkoxysilane are that these particles are spherical in shape and extremely uniform in size. As a measure for evaluating the particle size distribution of the fine spherical silica particles of the present invention, the particle size distribution of the particles was determined by electron microphotograph and the numbers of the particles having the respective sizes (diameters) were cumulated beginning with the largest particle size, and the diameters of the particles when the cumulative numbers thereof are 10% and 90% were represented by $d_{10}$ and $d_{90}$, respectively. In the present invention, the value of $d_{10}/d_{90}$ is preferably in the range of 1.1 to 2.7, more preferably 1.1 to 2.5, particularly preferably 1.1 to 2.3 A $d_{10}/d_{90}$ value of greater than 2.7 signifies a too broad particle size distribution, in which case the control of film surface roughness becomes difficult or the course particles increase in number.

It is actually very difficult to obtain the particles whose $d_{10}/d_{90}$ value is less than 1.1 on an industrial scale.

6

The fine spherical silica particles used in the present invention are 0.01 to 3.0 $\mu$m in diameter. If the diameter of these particles is less than 0.01 $\mu$m, there can be obtained no satisfactory improvement of surface flatness and slipping properties of the film. If the diameter of tee particles exceeds 3.0 $\mu$m, the produced film will prove too large in surface roughness or poor in quality due to the presence of the particles with large diameters.

The fine spherical silica particles of the present invention preferably comprise 90% by weight or more of silicon dioxide and it is preferable that the volumetric shape parameter ($\phi$v) thereof satisfies the following formula (2):

$$0.4 \leq \phi v \leq \frac{\pi}{6} \qquad (2)$$

wherein $\phi$v is defined as $\phi v = V/D^3$, V is the volume of particle ($\mu$m$^3$) and D is maximum projected diameter ($\mu$m) of the projection of the particles.

It is also desirable that the fine spherical silica particles of the present invention have a specific surface area ratio (R), defined by the formula (3), of 5.0 or greater, preferably 10 to 100:

$$R = \frac{\text{specific surface area determined by BET method}}{\text{specific surface area calculated based on equivalent spheres}} \qquad (3)$$

The "specific surface area ratio" indicates the degree of porosity of the silica particles. When the value of this ratio is less than 5, the particle is poor in affinity for polyester and also unsatisfactory in improving wear resintance of the produced film. Also, when the ratio exceeds 100, the interaction between the particles increases to encourage agglomeration of the particles, which reduces the performance of slurry filter and gives rise to coarse protuberances on the film surface.

In the present invention, the content of the fine spherical silica particles in the polyester composition is 0.001 to 5% by weight based on polyester. When the particle content is less than 0.001% by weight, there can be obtained no satisfactory effect of improving slipping properties and wear resistance of the produced film, and when the particle content exceeds 5% by weight, the produced film has too high surface roughness and also the agglomerates of particles and coarse protuberances increase.

The fine spherical silica particles used in the present invention have a very narrow particle size distribution and excellent dispersibility in ethylene glycol, so that no specific dispersing or classifying treatment is necessitated and also have very good filtrability through slurry filters.

In the preparation of the polyester composition of the present invention, the fine spherical silica particles are preferably added in the course of polyester synthesis reaction. For example, it is recommended to add the particles before ester exchange reaction, before esterification reaction, during ester exchange or esterification reaction, or after the end of ester exchange or esterification reaction and before start of polycondensation reaction.

As the polycondensation reaction catalyst in the preparation of polyester, there can be used the ordinarily employed catalysts such as Sb, Ge, Ti, Sn and Mg compounds.

In the present invention, it is preferred to employ a so-called direct polymerization method which incorporates esterification reaction. In this case, the fine spherical silica particles are preferably added at any stage till the initial polycondensation reaction is completed, because the rate of polycondensation reaction is increased thereby. The initial polycondensation reaction described above means the reaction stage at which the intrinsic viscosity of the reaction product is 0.2 or below.

Since the use of an ester exchange reaction catalyst is not required in the direct polymerization method, there can be obtained a polyester composition which contains little foreign matter, but in order to maximize such advantage, the amount of antimony compounds and/or magnesium compounds used in the polycondensation reaction are selected so as to satisfy the following formulae (4) - (6):

$$0 \leq Sb \leq 1.5 \qquad (4)$$

$$0 \leq Mg \leq 10 \qquad (5)$$

$$0.5 \leq 6Sb + Mg \leq 15 \qquad (6)$$

wherein Sb represents the total number of moles of antimony compounds per $10^6$ grams of polyester, and Mg represents the total number of moles of magnesium compounds per $10^6$ grams of polyester.

In the polyester composition of the present invention, use of other types of inactive particles in combination with the fine spherical silica particles (A particles) is preferred. This contributes to the improvement of wear resistance of the film made from the polyester composition. This also improves the electromagnetic properties of the film especially when it is used for a magnetic tape.

The following two groups of particles (I and II) can be cited as typical examples of other types of inactive particles (B particles) usable in the present invention:

I: calcium carbonate particles, amorphous zeolite particles, fine particles of anatase type titanium dioxide, calcium phosphate, kaolin, talc or clay;

II: fine particles precipitated by the result of the reaction of a phosphorus compound and a residue of an ester exchange catalyst in the polyester polycondensation reaction system, for example, fine particles comprising calcium, lithium and phosphorus compounds, fine particles comprising calcium and phosphorus compounds, and fine particles comprising calcium, magnesium and phosphorus compounds.

In case of using other types of inactive particles (B particles) in combination with A particles, the mixing ratio of A particles and B-I particles or B-II particles is selected in accordance with the following conditions.

In the case of combined use of A particles and B-I particles, the ratio of diameter of B-I particles to diameter of A particles ($D_2/D_1$) is 1.1 - 3, preferably 1.5 - 2.0, and the amount of B-I particles used is 0.005 to 1.0% by weight, preferably 0.01 to 0.7% by weight, based on polyester.

If the $D_2/D_1$ ratio is less than 1.1, the improvement of wear resistance and winding property of the film made from the composition will be unsatisfactory. Also, if the $D_2/D_1$ ratio exceeds 3.0, the surface roughness of the film will become too large and also the amount of large particles in the film, which become a cause of drop out or other trouble, will increase to deteriorate the film quality.

If the content of B-I particles in the polyester composition is less than 0.005% by weight, the film will not be improved to a satisfactory degree in wear resistance and winding property. If the content of B-I particles exceeds 1.0% by weight, there will result too large surface roughness of the film and an increased amount of large-sized particles which may cause drop out or other trouble, thus deteriorating the film quality.

The weight ratio of B-I particles to A particles is preferably in the range of 0.005 to 0.5, more preferably 0.01 to 0.1.

In the combined use of A particles and B-II particles, the latter are used in an amount of 0.05 to 1.0% by weight, preferably 0.05 to 0.4% by weight, based on polyester. If the content of B-II particles is less than 0.05% by weight, the surface roughness of the film will become too low to provide the desired slipping properties. On the other hand, if the content of B-II particles is higher than 1.0% by weight, the film surface will become too rough, causing a deterioration of electromagnetic properties in use of the film as an electromagnetic recording medium. The diameter of B-II particles is usually about 0.1 to 3 $\mu$m.

Now, a preparation process for a polyester containing precipitated particles especially suited for use in this invention will be described in detail.

A polyester containing such particles can be obtained, for example, by carrying out an ester exchange reaction in the presence of a lithium compound and a calcium compound, adding to the reaction product at least one compound selected from the group consisting of phosphoric acid, phosphorous acid or alkyl or allyl esters thereof in an amount of 0.6 to 3 times the total amount of said metallic compounds, and successively carrying out a polycondensation reaction.

Lithium compounds which can be dissolved in the esterification or ester exchange reaction product are usable in the ester exchange reaction. Examples of such lithium compounds are salts of aliphatic carboxylic acids such as acetic acid, propionic acid and butyric acid, salts of aromatic carboxylic acids such as benzoic acid and p-methylbenzoic acid, and lithium glycolates of ethylene glycol or propylene glycol. Among them, aliphatic lithium carboxylate, especially lithium acetate is preferred. The amount of such lithium compound to be added is preferably 0.03 to 0.4% by mole, more preferably 0.1 to 0.3% by mole, based on the aromatic dicarboxylic acid component for the polyester.

As the calcium compounds usable in the ester exchange reaction, it is possible to use any of those calcium compounds which can be dissolved in the esterification or ester exchange reaction product. Examples of such calcium compounds are salts of aliphatic carboxylic acids such as acetic acid, propionic acid and butyric acid, salts of aromatic carboxylic acids such as benzoic acid and p-methylbenzoic acid, and calcium glycolates of ethylene glycol or propylene glycol. Among them, aliphatic calcium carboxylate, especially calcium acetate is preferred.

8

The amount of such calcium compound to be used in the ester exchange reaction is preferably 0.05 to 0.3% by mole, more preferably 0.08 to 0.15% by mole based on the aromatic dicarboxylic acid component for polyester.

As the phosphorus compound, there can be used any of those phosphorus compounds which are reacted with the metallic compounds and are partially or wholly converted into a phosphate or phosphite of the metal, but it is preferred to use phosphoric acid, trialkyl esters of phosphoric acid, partial alkyl esters of phosphoric acid, phosphorous acid, trialkyl esters of phosphorous acid, and partial alkyl esters of phosphorous acid.

Such phosphorus compound is added in an amount of 0.6 to 3 equivalents, preferably 0.8 to 2 equivalents, more preferably 0.9 to 1.5 equivalents to the total amount of the metallic compounds.

The equivalent ratio of phosphorus compound to metallic compounds is given by the following formula (7):

$$\frac{P}{Ca + \frac{1}{2}Li} \qquad (7)$$

wherein P, Ca and Li represent the number of moles of phosphorus compound, calcium compound and lithium compound, respectively.

As described above, precipitated particles containing metallic elements and phosphorus element can be obtained by using the metallic compounds and phosphorus compounds in combination.

It is especially preferable that each of calcium, lithium and phosphorus elements be contained in an amount of 1.0% by weight or more based on the precipitated particles. In this case, it is possible to form a great many of sharp and uniform fine protuberances on the film surface, which greatly contributes to the improvement of slip characteristics of the film.

Of course, a part or whole of lithium or calcium compound may be added after the ester exchange reaction has been completed.

In this invention, the particles containing lithium, calcium and phosphorus elements precipitated in polyester are used in an amount of 0.05 to 1.0% by weight, preferably 0.05 to 0.4% by weight, more preferably 0.06 to 0.18% by weight, based on the polyester film. In this case, the quantitative determination of the precipitated particles is made in the following way.

Quantitative determination of precipitated particles in polyester film:

1.0 litre of o-chlorophenol is added to 100 g of polyester, and the mixture is heated at 120°C for 3 hours and then centrifuged with Beckmann Ultracentrifuge L3-50 at 30,000 r.p.m. for 40 minutes, and the resulting particles are dried in vacuo at 100°C. These particles are measured by a differential scanning calorimeter, and when a melt peak corresponding to polymer has appeared, the particles are added with o-chlorophenol, heated, then cooled and again centrifuged. When the melt peak due to polymer has disappeared, the weight of said particles is regarded as the weight of precipitated particles and the weight ratio to polyester is calculated.

In the present invention, in case of using B-I particles, it is preferable to regulate their Mohs hardness to 4.0 or below. If the Mohs hardness of the particles is higher than 4.0, the film and rolls could suffer from scratches when the film is rolled up or subjected to calendering after it has been coated with a magnetic layer.

The polyester composition of this invention can be used for producing a stretched polyester film according to a known method, for example, the method described in Japanese Patent Publication No. 30-5639(1955).

The polyester composition of the present invention can be used, for example, for producing longitudinally strengthened films, transversely strengthened films or both longitudinally and transversely strengthened films. It is also suited for use as a material of films produced by using such film-forming conditions as to form minute depressions on the film surface.

The polyester film obtained from the polyester composition of the present invention is very useful as base film for magnetic recording media such as magnetic tapes or floppy discs, or as base film for various other types of commercial products such as condenser, photographic plate, electric insulator, thermosensitive transfer sheet, package, transfer mark, gold and silver threads.

EP 0 257 611 B1

The polyester film obtained from the polyester composition of the present invention usually has an average surface roughness (Ra) of 0.003 to 0.20 $\mu$m and a thickness of 1 to 400 $\mu$m, particularly 1 to 20 $\mu$m.

Also, the polyester film obtained from the polyester composition of the present invention is excellent in wear resistance and rarely suffers from drop out as the film contains the specific fine spherical silica particles described above. These quality characteristics are particularly conspicuous in the film which satisfies the requirements expressed by the following formulae (8) and (9) at the same time:

$$\Sigma H_n \leq 20, 7 \geq n \geq 3 \qquad (8)$$

$$\frac{H_n}{H_{n+1}} \geq 10, \quad 7 \geq n \geq 3 \qquad (9)$$

wherein $H_n$ is the number of interference fringes of n-th order (fringes/cm$^2$) when the film surface was measured by double beam interference method.

The use of polyester of the present invention for magnetic recording media and capacitors will be described in detail.

In use of the polyester composition of the present invention as a magnetic recording medium, the starting polyester composition is preferably the one whose specific resistance ($\rho_v$) in the molten state is 1.0 x 18$^8$ $\Omega \cdot$cm or below. If the specific resistance of the starting polyester composition when melted exceeds the above value, small dents or recesses are formed in the amorphous sheet made from the composition by an electrostatic cooling method, and when a biaxially stretched film is made therefrom, the thickness unevenness of the film increases to cause non-uniform coating when the film is coated with a magnetic layer, resulting in a deterioration of electro-magnetic transducing characteristics of the finally produced magnetic recording medium.

The specific resistance ($\rho_v$) of the starting polyester composition can be made 1.0 x 10$^8$ $\Omega \cdot$cm or below by, for example, regulating the ratio of the phosphorus compound used as thermal stability improver to the alkaline earth metal compound used as ester exchange catalyst (P/Me) to 1.4 or below in equivalent ratio, or by adding an alkaline metal compound after the end of ester exchange reaction or in the early or middle stage of polymerization reaction.

As the film used for magnetic recording media, a film in which average refractive index $\bar{n}$ and refractive index in thicknesswise direction $n_\alpha$ is in the ranges defined by the following formulae (10) and (11), respectively is preferred:

$$1.600 \leq \bar{n} \leq 1.606 \qquad (10)$$

$$n_\alpha \geq 1.492 \qquad (11)$$

wherein the average refractive index is employed as an index for crystallization degree of the film, and the refractive index in thicknesswise direction is employed as an index for the degree of facial orientation of the film.

When the average refractive index exceeds 1.606, the film is lowered in strength due to too high degree of crystallization and lowered in wear resistance, and when the average refractive index is less than 1.600, the dimensional stability of the film at high temperatures is lowered, causing a deterioration of skew characteristics, etc., of the magnetic tape produced from the film.

On the other hand, when the refractive index in thicknesswise direction is less than 1.492, the film is incapable of producing a satisfactory effect of improving slip characteristics and wear resistance.

Such a film can be obtained, for example, by successively biaxially stretching method in which the longitudinal stretching temperature is set at about 105 - 115$^\circ$C which is 5 to 30$^\circ$C higher than the ordinary stretching temperature.

Generally, magnetic recording media can be roughly classified into two types: magnetic tapes and magnetic discs. The thickness of base film used for the former is usually 4 to 30 $\mu$m and that used for the latter is usually 30 to 100 $\mu$m.

An important mechanical property required for the film for magnetic recording media is that the $F_5$ value of the film in its machine direction is not less than 117.6 N/mm$^2$ (12 kg/mm$^2$), preferably not less than

10

156.8 N/mm$^2$ (16 kg/mm$^2$). The film with an F$_5$ value of less than 117.6 N/mm$^2$ (12 kg/mm$^2$) is relatively limited in blowing capacity even when using the particles other than the fine spherical silica particles of the present invention, and the advantageous properties of the fine spherical silica particles can not be put to best use.

The F$_5$ value indicates the stress (N/mm$^2$) [(kg/mm$^2$)] at 5% elongation of the film.

In the case of a film with high strength such as polyethylene-2,6-naphthalate film, the F$_5$ value in the machine direction is preferably 196 N/mm$^2$ (20 kg/mm$^2$) or greater, more preferably 274.4 N/mm$^2$ (28 kg/mm$^2$) or greater.

The effect of the present invention is maximized when the F$_5$ value in the machine direction of the film (F$_{5MD}$) and the F$_5$ value in the transverse direction (F$_{5TD}$) are defined by the following formula (12), especially by the formula (13):

$$3.0 > \frac{F_{5MD}}{F_{5TD}} > 1.1 \qquad (12)$$

$$2.5 > \frac{F_{5MD}}{F_{5TD}} > 1.6 \qquad (13)$$

The conventional high-strength films falling in the above range of F$_5$ value had the problems such as anisotropy of physical properties in the widthwise direction or affinity of particles and polyester, but the present invention has made it possible to solve these problems by the use of the fine spherical silica particles.

Known film forming methods can be employed for making the F$_5$ value in the machine direction 117.6 N/mm$^2$ (12 kg/mm$^2$) or greater. For example, it can be achieved by a method in which chips of polyester composition are melt extruded into a film at 270 - 300°C, then cooled to 40 - 70°C and solidified to form an amorphous sheet, and this sheet is then biaxially stretched in the machine and transverse directions successively or simultaneously, followed by 1.05- to 2.0-fold restretching in the machine direction at 110 - 180°C, and then heat treated at 160 - 240°C. In this case, it is possible to properly incorporate such treatments as heat setting before restretching in the machine direction, relaxing in the machine direction before restretching, slight-degree stretching in the machine direction before or after restretching. In the case of polyethylene-2,6-naphthalate, it is possible to obtain a film having an F$_5$ value of 196 N/mm$^2$ (20 kg/mm$^2$) or greater in the machine direction by using the same techniques except that the different stretching temperatures are used. For instance, a substantially non-oriented unstretched sheet of polyethylene-2,6-naphthalate which has been melt extruded and then cooled and solidified is biaxially stretched in the machine and transverse directions successively or simultaneously and then restretched 1.05 to 4.0 times in the machine direction at 140 - 200°C, and the resulting film is heat treated at a temperature between 180°C and 260°C. In this case, too, the techniques (heat setting before restreching, relaxing after restretching, slight-degree stretching in the machine direction before or after restretching) can be properly employed.

Concerning the physical properties of the film for magnetic recording media, it is preferable that the film has, in addition to the above characteristics, an average surface roughness (Ra), a double refractive index (Δn) and a number of broken protuberances (Bp) on the film surface defined by the following formulae (14), (15) and (16), respectively:

$0.005 \leq Ra \leq 0.030$ (μm)  (14)

$\Delta n \leq 20 \times 10^{-3}$  (15)

$Bp \leq 10$ (per mm$^2$)  (16)

When the average surface roughness is less than 0.005 μm, the film proves poor in workability, running property and wear resistance, while when it exceeds 0.030 μm, the magnetic recording medium made from the film is found poor in electro-magnetic transducing characteristics. The number of broken protuberances on the film surface is an indication of affinity of particles for polyester. The greater the number of broken protuberances, the less is the affinity. Bp (number of broken protuberances) of greater than $10/mm^2$ indicates poor affinity of particles, and in this case, there takes place much deposition of powder on the calender rolls during calendering in the production process of magnetic recording medium, resulting in the deteriorated properties of the product. Wear resistance of the magnetic recording medium at the time of recording and reproduction is also lowered. When,the double refractive index ($\Delta n$) exceeds $20 \times 10^{-3}$, the film has a large heat shrinkage and the magnetic recording medium made therefrom is lowered in skew characteristics at the time of reproduction, especially in use under high-temperature and high-humidity conditions.

Another preferable film property is that the number of coarse protuberances of 0.81 $\mu$m or greater in height on the film surface is less than 10 per 25 $cm^2$, and the number of coarse protuberances of 0.54 to 0.81 $\mu$m is less than 50 per 25 $cm^2$. Especially, such property is an important requirement for the film to be used for magnetic discs. Such property can maintain the film handling characteristics good in the magnetic disc production process and can also enhance the electromagnetic characteristics of the produced magnetic disc.

It should be noted that the film having such property can be obtained only when using the polyester composition containing the fine spherical silica particles of the present invention which can give a uniform and fine film surface.

It is also pointed out as still another preferable film property that the average surface roughness (Ra) ($\mu$m) of the film, and the ratio of maximum height of protuberance (Rt) ($\mu$m) of the film to Ra (Rt/Ra) fall within the ranges defined by the following formulae (17) and (18), respectively, and also the number of broken protuberances on the film surface is less than $20/mm^2$:

$$0.003 \leq Ra \leq 0.015 \qquad (17)$$

$$5 \leq Rt/Ra \leq 20 \qquad (18)$$

When Ra is less than 0.003 $\mu$m, the film is unsatisfactory in handling characteristics and wear resistance, and when Ra exceeds 0.015 $\mu$m, there can be obtained no satisfactory reproduction output as a high-density recording medium. The Rt/Ra ratio is a measure of uniformity of the height of protuberances. Generally, the smaller than Rt/Ra ratio, the better is the uniformity. However, when the Rt/Ra ratio is less than 5, although the uniformity of protuberance height is good, the shape of protuberance becomes broad and the reproduction output is rather lowered. When the Rt/Ra ratio exceeds 20, the protuberance height distribution becomes non-uniform and in this case, too, the reproduction output decreases. The values of Ra and Rt/Ra are based on average diameter of the particles contained, particle size distribution and particle content, but these values are also variable according to the base film producing conditions, that is, the stretching conditions of the polyester film made by a biaxial stretching method. In any case, the techniques employable in the present invention are not subject to any specific limitations as far as they meet the requirements of the present invention.

In case of using polyester film of the present invention for capacitors, the specific resistance of the starting polyester composition in the molten state is preferably adjusted to $2.0 \times 10^8$ $\Omega \bullet cm$ or higher. In use of polyester film for capacitors, polyester film is required to satisfy some property requirements. One important property requirement is that the film has a specific "CR value" which is the product of electrostatic capacity and insulation resistance at normal and high temperature. The present inventors found that this property requirement can be met when the specific resistance of polyester composition in the molten state is maintained $2.0 \times 10^8 \Omega \bullet cm$ or above.

Maintenance of specific resistance ($\rho_v$) at or above $2.0 \times 10^8$ $\Omega \bullet cm$ can be achieved by regulating the ratio of the phosphorus compound used as thermal stability improver to the alkaline earth metal compound used as ester exchange catalyst (P/Me) to 1.2 or above, preferably 1.5 or above in equivalent ratio. Preferred examples of alkaline earth metal compounds usable here are calcium acetate, magnesium acetate, manganese acetate and the like. Phosphoric acid and phosphoric acid esters can be favorably used as phosphorus compound.

Also, in use of polyester film of the present invention for capacitors, it is preferable that the number of protuberances on film surface is not less than $1.0 \times 10^3$ per $mm^2$, and that the difference ($\Delta d$) between micrometric film thickness (measured by using 10 pieces of film) and gravimetric film thickness falls within the range defined by the following formula (19):

$$0.1 \leqq \Delta d \leqq 0.4 \qquad (19)$$

When the number of protuberances on film surface is less than $1.0 \times 10^3$ per mm$^2$, slip characteristics of the film are bad and therefore film workability is poor.

$\Delta d$ is a numerical indication of the degree of surface roughness (for the measuring method, see the section of Examples described below). When the value of $\Delta d$ exceeds 0.4, the electrode gap in the produced capacitor becomes too large, causing a reduction of electric capacity. When $\Delta d$ is less than 0.1, no satisfactory slip characteristics can be obtained and the workability is poor.

The polyester films having the above preferable properties can be obtained only when using a polyester composition containing amorphous and fine spherical silica particles of the present invention which can give a uniform and fine film surface. Such polyester films can be produced according to the known methods, for example, the method described in Japanese Patent Publication No. 30-5639 (1955).

The present invention will hereinafter be described in further detail by showing the examples thereof, but it is to be understood that these examples are merely intended to be illustrative and not limitative of the scope of the invention. The determination methods and definitions of various properties and characteristics shown in the Examples are as described below. All "parts" and "%" appearing in the following Examples are by weight unless otherwise noted.

(1) Average diameter and particle size distribution of fine spherical silica particles

The particle diameter was measured by electron microphotographic method, and the particle size distribution was determined by measuring the diameters of about 1,000 pieces of particles and cumulating the numbers of the particles having the respective diameters beginning with the largest particle size. The diameter of the particles when the cumulative number thereof is 10% of the total number of particles was expressed as $d_{10}$ and the diameter of the particles when the cumulative number thereof is 90% of the total number of particles was expressed as $d_{90}$, and the degree of breadth of particle size distribution was indicated by the value of $d_{10}/d_{90}$ (diameter dispersion index).

Measurements of other additive particles were made by centrifugal precipitation method.

(2) Volumetric shape parameter of fine spherical silica particles

In the present invention, volumetric shape parameter ($\phi$v) is defined as $D/V^3$ wherein D is the maximum diameter ($\mu$m) of fine spherical silica particles as measured by electron microphotographic method and V is the measured volume ($\mu$m$^3$) of the particles.

(3) Specific surface area ratio (R) of fine spherical silica particles

$$R = \frac{\text{specific surface area determined by BET method}}{\text{specific surface area calculated based on equivalent spheres}}$$

The specific surface area determined by BET method is the value determined from the adsorption of nitrogen gas at the temperature of liquid nitrogen.

(4) Intrinsic viscosity ($\eta$) of polyester composition

1 g of polyester composition was dissolved in 100 ml of a 50/50 (by weight) phenol/tetrachloroethane mixed solvent, and the viscosity of the solution was measured at 30°C.

(5) Particle dispersibility in film

It was determined by observing under a microscope the dispersed state of particles added in a biaxially stretched film.

13

(6) Specific resistance of polyester composition in the molten state

12 g of polyester composition was put into a test tube having $N_2$ in- or out-let and then dipped in an oil bath of 285°C. After the composition has been perfectly melted, air bubbles were completely removed by repeating evacuation and introduction of nitrogen gas. Then stainless steel electrodes were inserted into the test tube, and after maintaining them as it was for 10 min., a direct current of 3 kV was applied to the electrodes. Immediately after current application, the amperage was read and the specific resistance was calculated from the following formula:

$$\rho_v = \frac{3000}{I} \times \frac{S}{\ell} \quad (\Omega \cdot cm)$$

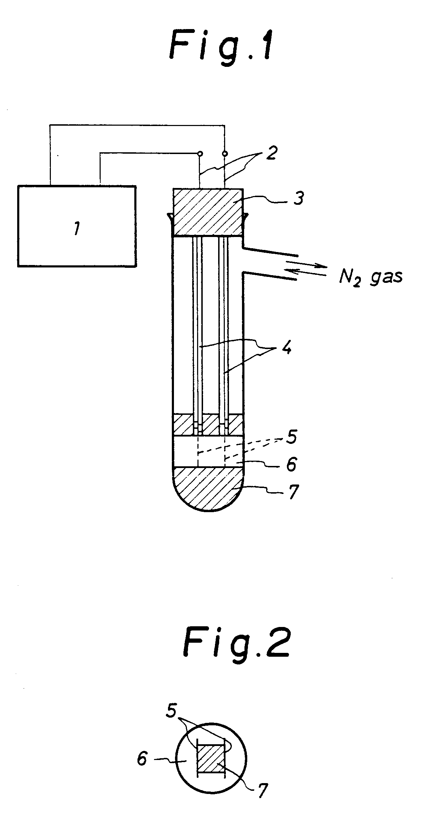

In the above formula, $\rho_v$ is specific resistance ($\Omega \cdot cm$), I is amperage (A), S is sectional area ($cm^2$) of electrode, and $\ell$ is distance (cm) between the electrodes. Schematic illustrations of the specific resistance measuring method are shown in Figs. 1 and 2.

(7) Break frequency

The average break frequency (number of times of break) per 100,000 meters of film length was shown,

(8) Slip characteristics

The slip characteristics of film were indicated by coefficient of kinetic friction. The measurement was made by a method according to ASTMD-1894 modified to allow measurement with a tape sample. The measurement was conducted under an atmosphere of 23°C ± 1°C and 50 ± 5% RH by using the samples of 15 m/m in width and 150 m/m in length, at a pulling rate of 20 mm/min.

(9) Coefficient of kinetic friction ($\mu$d) against metal

By using the apparatus shown in Fig. 3, a film was contacted with a fixed hard chrome-plated metal roll (6 mm in diameter) at a winding angle ($\theta$) of 135°, and with a load ($T_2$) of 53 g applied to one end, the film was let run at a speed of 1 m/min. The resisting force ($T_1$ (g)) at the other end was measured, and the coefficient of friction ($\mu$d) in running of the film was determined from the following formula:

$$\mu d = \frac{1}{\theta} \, \ell n(\frac{T_1}{T_2}) = 0.424 \, \ell n \, (\frac{T_1}{53})$$

(10) Slipping properties

Two pieces of film were placed on a flat glass plate and a rubber plate was further placed thereon. Then a load was applied thereon so that the contacting pressure of two pieces of film against each other would become 2 $g/cm^2$. In this state, two pieces of film were let slide relative to each other at a speed of 20 mm/min and the frictional force was measured. The coefficient of friction at a point where the two pieces of film slid 5 mm relative to each other was assumed to be the coefficient of kinetic friction ($\mu$d), and it was ranked as follows:
$\mu$d ≤ 0.50 Good
0.50 ≤ $\mu$d ≤ 0.60 Normal
0.60 ≤ $\mu$d Bad

(11) Surface roughness

Surface roughness was represented by the average center line surface roughness Ra ($\mu$m). Ra was determined in the following way by using a surface roughness meter (SE-3FK) made by Kosaka Kenkyusho

14

Co., Ltd. From the film surface roughness curve (sectional curve of film a portion with a standard length L (2.5 mm) in the direction of center line was taken out. Expressing the roughness curve as Y = f(x) with the center line of the portion taken out representing the X asis and the direction vertical to the center line representing the Y asis, the value given from the following formula was presented as Ra ($\mu$m):

$$Ra = \frac{1}{L} \int_{0}^{L} |f(x)| dx$$

The radius of the end of the feeler was 2 $\mu$m, the load was 30 mg, and cut-off value was 80 $\mu$m. Ra shown here is the average of the measurements at total 10 points, 5 points in the machine direction and 5 points in the transverse direction.

(12) Maximum height of protuberance (Rt)

The maximum height of protuberance was expressed by the difference between the maximum value and the minimum value of the sectional curve of film obtained in the determination of surface roughness described in the preceeding section. Rt shown here is the average of the measurements at total 10 points as in the case of Ra.

(13) Number of coarse protuberances

The film surface was deposited with aluminum and examined with a double beam interference microscope. The protuberances showing the 2nd order interference fringes at a measuring wavelength of 0.54 $\mu$m ($H_2$) were supposed to have a height of 0.54 to less than 0.81 $\mu$m, and the protuberances showing interference fringes of 3rd and higher orders ($H_3$) were supposed to have a height of 0.81 $\mu$m or greater. The number of these protuberances was counted per 25 $cm^2$.

(14) Number of surface protuberances

The number of protuberances per 0.1 $mm^2$ was counted from light microphotographs of film surface and converted to the number per 1 $mm^2$.

(15) Degree of surface roughness, $\Delta d$ (Micrometric film thickness measured with 10 pieces of film placed one on another is indicated by $d_{10}$)

The thickness of a pile of 10 pieces of film was measured by using a 1/1000 micrometer with a measuring force of 700 ± 100 gf and a measuring length of 0 - 25 mm according to JIS B-7502, and the obtained value was divided by 10 to give the $d_{10}$ value ($\mu$m).

(Gravimetric film thickness is indicated by $d_W$)

A 10 cm square piece was cut out from the film and its weight W was measured by Mettler electron balance, and $d_W$ was determined from the following formula:

$$d_W = \frac{W}{1.4} \times 10^2 \ (\mu m)$$

$\Delta d$ was defined as follows:

$\Delta d = d_{10} - d_W \ (\mu m)$

(16) Average refractive index, refractive index in the thicknesswise direction and double refractive index

Measurement was made on sodium D line at 23°C by using Abbe's refractometer. Average refractive index $\bar{n}$ is given by the following equation:

$$\bar{n} = 1/3 \, (n_\alpha) + n_\beta + n_\gamma)$$

wherein $n_\alpha$ is refractive index in the thicknesswise direction, $n_\gamma$ is refractive index in the direction of main orientation, and $n_\beta$ is refractive index in the direction orthogonal to the main orientation direction.

Double refractive index is given by the following equation:

$$\Delta n = n_\gamma - n_\beta$$

(17) $F_5$ value

The $F_5$ value was determined from the stress at 5% elongation under an atmosphere of 23°C and 50% RH by using Tensilon UTM-IV L made by Toyo Bauldwin Co., Ltd., under the following conditions:

Specimen shape:    strip film (15 cm long and 1 cm wide)
Chuck interval:     50 mm
Pulling rate:       100%/min

(18) Evaluation of winding characteristics

The appearance of the surface and the winding surface of the rolled film observed after rolling up the film was evaluated as follows:

(a) Surface was subatantially free of winkles and lumpy defects and had a uniform winding surface ... o
(b) Surface was almost free of wrinkles but had some lumpy defects and was also slightly ununiform at winding surface ... △
(c) Surface had wrinkles and lumpy defects and/or was excessively ununiform at winding surface ... x.

(19) Number of broken protuberances

The gold-deposited film surface was photographed at 2,000 magnifications by a scanning electron microscope, and the number of the depressions or dents made after vanishment of protuberances supposed to be formed by particles was counted and converted to the number per unit surface area. The smaller the number, the better.

(20) Wear resistance

By using a film running system shown in Fig. 4, the film was let run through a distance of 1,000 meters, and the amount of worn-out white powder adhering to a 6 mm$\phi$ hard chrome-made fixed pin was visually observed and evaluated on the following criterion. Film speed was 10 m/min and film tension was about 200 g. The angle ($\theta$) was 130°C.

Rank A:     No white powder adhered to the pin.
Rank B:     White powder adhered slightly.
Rank C:     A small amount (greater than Rank B) of white powder adhered.
Rank D:     White powder adhered heavily.

(21) Generation of white powder

The white powder adhering to the feed rolls in the stretched film winder was visually observed and evaluated according to the following criterion (o, △ and x). Observation was made at a point when 50,000 meters of film has been wound up.

o     No white powder generated.
△     White powder generated in a small amount.
x     White powder generated in a large amount.

(22) Evaluation of fouling of calender

The degree of fouling on the roll surface contacting the base film was evaluated by using a 5-stage mini-supercalender. The 5-point calender used consisted of planished metal rolls and polyester type composite resin rolls. Calendering was conducted under the following conditions: roll temperature = 85°C, linear pressure = 250 kg/cm, tape running speed = 80 m/min. A magnetic tape of 5000 m in length was let run 7 times repeatedly, and the amount of white powder adhering to the resin roll was visually observed and the degree of fouling of the roll was evaluated on the following basis:

    o    There was seen almost no adhesion of white powder on the resin roll.

    Δ    Slight adhesion of white powder on the roll was noted.

    x    There was seen obvious adhesion of white powder on the roll.

(23) Resistance to scratching

Aluminum was vacuum deposited on the surface of a 15 $\mu$m thick polyester film to a thickness of 250 ± 10 Å, and this film was slitted to a 35 mm width and applied on a movable carrier with the aluminum deposited side facing upwards. On this aluminum deposited side of the film was placed a test film of the same width with an end thereof fixed. By applying a load of 16 g/cm$^2$ on the test film, the movable carrier was moved at a speed of 20 mm/min, causing the aluminum deposited face and the test film to move sliding relative to each other along a distance of 50 - 60 mm. The amcunt of scratches given to the aluminum deposited side of the film during this operation was measured and expressed by whole light transmittance (%) by using a haze meter NDH-20 D made by Nippon Denshoku Co., Ltd. The greater the amount of scratches, the higher is the whole light transmittance.

(24) Magnetic tape characteristics (characteristics of magnetic recording medium)

First, a magnetic coating material was prepared by mixing and dispersing 200 parts of fine magnetic powder, 30 parts of polyurethane resin, 10 parts of nitrocellulose, 10 parts of vinyl chloride-vinyl acetate copolymer, 5 parts of lecithin, 100 parts of cyclohexanone, 100 parts of methyl isobutyl ketone and 300 parts of methyl ethyl ketone in a ball mill for 48 hours and then further adding thereto 5 parts of polyisocyanate compound. This coating material was coated on a polyester film to form a magnetic layer so that the film thickness after drying would become 2 $\mu$m. Before the coating material has been sufficiently dried and solidified, the film was magnetically oriented and then dried. Then this coated film was subjected to a surface treatment by a supercalender and slitted to a 1/2 inch width to form a video tape. This video tape was set in NV-3700 Video Deck made by Matsushita Denki Co., Ltd., and operated at normal speed to evaluate the following magnetic tape characteristics.

(24-1) VTR head output

The VTR head output at a measuring frequency of 4 MHz was measured by a synchroscope and indicated by decibel (dB) as a relative value to that of the sample of Example 5 in Table 1 which was assumed to be 0.0 decibel (dB).

(24-2) Dropouts

A video tape which had recorded signals of 4.4 MHz was played back and dropouts were counted for about 20 minutes by a dropout counter made by Ohkura Industry Co., Ltd., and converted to the number of dropouts per minute.

(24-3) Skew

A video tape which had recorded chroma signal (reference signal of color) was played back and subjected to delayed sweep by Color Monitor CMM20-11 made by Shibasoku Co., Ltd. The quantity of distortion on the picture was read by a measure and converted to the horizontal scan time ($\mu$sec) by using the ratio with the full width of the moniter picture.

17

(25) Evaluation of magnetic disc characteristics (output, dropout)

The produced polyester film (75 $\mu$m thick) was provided with a magnetic layer by a conventional method and formed into a microfloppy disc having a diameter of 3.5 inches.

(25-1) Output of disc

Signals were recorded tracks of the floppy disc by a floppy disc drive under the conditions of 20°C and 35% RH and then reproduced. The output was measured and evaluated according to the following criterion:

o    Good
△    Rather bad
x    Very bad

(25-2) Dropout

RP signals were envelope detected and regulated in waveshape thereof by a selecting circuit. The number of dropouts per unit time was counted and expressed by a relative value to the number of dropouts in Comparative Example 5 (number of dropouts/number of dropouts in Comparative Example 5). The smaller the value, the better.

(26) Determination of CR value at high temperatures

Measurement was made after leaving a capacitor in a 125°C thermostat for one hour. Electrostatic capacity C was measured by using "RLC Digibridge" made by General Radio Inc. under the conditions of 1 kHz and 0.3 Vrms. Measurement of electric resistance R was made by applying DC 100 V to the capacitor and reading the indicated value one minute later by using a super-insulation resistance tester made by Yokokawa Hewlett Packard. The product of thus determined C and R was expressed as CR value ($\Omega \cdot F$).

(27) Capacitor capacity

Aluminum was deposited on the film by a vacuum depositing apparatus, and this film was slit in such a way that the width of the deposited portion would become 10 mm. Two 2-meter long slit tapes having different size of right and left non-deposited sides (margins) were piled and wound together, followed by sealing of end face and connection of lead wires to form a capacitor element. The electrostatic capacity of this capacitor element was measured under an atmosphere of 23°C and 50% RH under the conditions of 1 kHz and 0.3 Vrms by using "RLC Digibridge" made by General Radio Inc.

(28) Measurement of dielectric strength

By using a 100 kV DC dielectric strength tester, the electrode ends of the capacitor element obtained in (27) were connected to the tester by clips and the tester voltage was raised at a rate of 100 V/sec. The voltage at the moment when the capacitor was broken to cause shortcircuiting was read.

(29) Life characteristics

A DC voltage of 300 V was applied to both electrode ends of the capacitors obtained in (27). The test was conducted under an atmosphere of 85°C for accelerated testing. Of total 100 capacitor elements tested, those which maintained the normal function as capacitor without causing shortcircuiting after the passage of 1,000 hours were counted and their number was indicated as residual rate.

The fine spherical silica particles used in the Examples were prepared according to the following synthesizing method.

Synthesis of silica particles:

30.4 g of tetramethylsilane was dissolved in 397 g of methanol and maintained at 20°C (solution A). Separately, 95 g of water was added to 878 g of methanol and this solution was mixed was 243 g of a 28% aqueous ammonia solution and maintained at 20°C (solution B). The solution A was added to solution B under stirring. Upon addition, there took place hydrolysis and condensation reaction, and the reaction system became cloudy. After the addition of solution A has been completed, the mixed solution was further stirred for one hour and then added with 288 g of ethylene glycol. The mixture was then heated under reduced pressure to distil off excess water, methanol and ammonia, obtaining an ethylene glycol slurry containing silica in a concentration of 4%. After drying this ethylene glycol slurry, the average particle diameter was determined by electron microphotograph. The average particle diameter was 0.15 $\mu$m and $d_{10}/d_{90}$ was 1.59. There were obtained the uniform spherical particles with extremely high uniformity in size. The slurry was subjected to a filtering treatment by using a filter having a filtering ability of 3 $\mu$m cuts. The slurry showed excellent filtering characteristics.

The fine spherical silica particles obtained in the manner described above had a purity of 99% or above. There were also obtained the silica particles differing in average diameter, particle size distribution, volumetric shape parameter and specific surface area ratio by changing the conditions for producing the particles such as the amounts of methanol, water and ammonia solution in solution B.

[Polyethylene terephthalate compositions]

EXAMPLE A-1:

100 parts of dimethyl terephthalate, 60 parts of ethylene glycol and 0.09 parts of magnesium acetate tetrahydrate were supplied into a reactor, and the mixture was heated to initiate the ester exchange reaction while distilling off methanol. The temperature was raised to 230°C in 4 hours from the start of the reaction to substantially complete the ester exchange reaction.

To the reaction product was added 0.04 parts of ethyl acid phosphate, followed by further addition of 7.5 parts of said fine spherical silica particles having an average diameter of 0.15 $\mu$m and 0.04 parts of antimony trioxide to carry out a polycondensation reaction for 4 hours, obtaining a polyethylene terephthalate composition having an intrinsic viscosity of 0.64.

This polyester composition was heated and dried at 180°C for 6 hours under a nitrogen atmosphere and then extruded into a 150 $\mu$m thick sheet by an extruder, and the sheet was stretched 3.7 times in the machine direction and 4 times in the transverse direction. The stretched sheet was heat set at 220°C for 5 seconds to obtain a 10 $\mu$m thick biaxially stretched polyethylene terephthalate film.

The properties of the obtained film are shown in Table 1.

EXAMPLE A-2:

Amorphous fine spherical silica particles were synthesized in the same way as in Example A-1 except that tetraethylsilane was used in place of tetramethylsilane. The obtained silica particles had an average diameter of 0.09 $\mu$m and $d_{10}/d_{90}$ of 2.25. By using these particles, there was prepared an ethylene glycol slurry with 3% concentration of the particles.

This slurry of the silica particles was added to other components in the same manner as in Example A-1 so that the content of the silica particles would be 0.3% based on polyester, and the mixture was subjected to a polycondensation reaction to obtain a polyester composition having an intrinsic viscosity of 0.63.

This polyester composition was subjected to the same treatments as in Example A-1 to obtain a 10 $\mu$m thick biaxially stretched polyester film. The results of property evaluations of this film are shown in Table 1.

EXAMPLE A-3:

Fine spherical silica particles were synthesized in the same way as in Example A-1 except that ethanol was used in place of methanol and that the reaction temperature was 5°C.

The average diameter of the obtained particles was 0.25 $\mu$m, and $d_{10}/d_{90}$ = 1.18. By using these silica particles, a polyester composition was prepared in the same way as in Example A-1 except that 3 parts of 10% ethylene glycol slurry of the silica particles were added to the reaction system along with starting ethylene glycol from the initial phase of the ester exchange reaction. This polyester composition was treated in the same manner as in Example A-1 to obtain a 10 $\mu$m thick biaxially stretched polyester film. The property evaluation results are shown in Table 1.

COMPARATIVE EXAMPLE A-1:

The silica particles (primary particle diameter: 0.09 $\mu$m) prepared by a dry process were dispersed in ethylene glycol by stirring at 10,000 r.p.m. for one hour by using a homomixer mfd. by Tokushu Kika Kogyo Co., Ltd. The resulting 4% concentration slurry was subjected to filtration with a 7 $\mu$m cut filter, but filtration was very difficult. After filtration, the slurry was added to the polyester synthesis reaction system in the same way as in Example A-1 to obtain a polyester composition containing 0.3% of silica particles. By using this polyester composition, a 10 $\mu$m thick biaxially stretched polyester film was produced by the same method as in Example A-1. From the surface observation of the film, it was noted that the added silica particles were poor in dispersibility and there existed many ununiform agglomerates of particles. According, there were many coarse protuberances on the film, which lowered the commercial value of the film.

Table 1

| | Fine silica particles | | Particle content (%) | Film properties | | | | Dispersibility of particles in film | Winding characteristics |
| | Average diameter (μm) | $d_{10}/d_{90}$ | | Ra (μm) | μd | Number of coarse protuberances (per 25 cm²) | | | |
| | | | | | | II$_2$ or greater | II$_3$ or greater | | |
| EXAMPLE A-1 | 0.15 | 1.59 | 0.3 | 0.009 | 0.38 | 43 | 8 | Good | O |
| EXAMPLE A-2 | 0.09 | 2.25 | 0.3 | 0.007 | 0.44 | 78 | 26 | Good | Δ |
| EXAMPLE A-3 | 0.25 | 1.18 | 0.3 | 0.010 | 0.36 | 24 | 7 | Good | O |
| COMP. EXAMPLE A-1 | 0.09 | - | 0.3 | 0.009 | 0.58 | 150 | 60 | Bad | Δ-x |

[Polyethylene naphthalate compositions]

EXAMPLE B-1:

100 parts of dimethyl 2,6-naphthalenedicarboxylate, 60 parts of ethylene glycol and 0.09 parts of magnesium acetate tetrahydrate were supplied into a reactor, and the mixture was heated to carry out an ester exchange reaction while distilling off methanol. The temperature was raised to 230°C in about 4 hours from the start of the reaction, at which the ester exchange reaction was substantially completed.

To the reaction product was added 0.04 parts of ethyl acid phosphate, followed by addition of said slurry of spherical silica particles of 0.30 $\mu$m in average diameter so that the content of spherical silica particles would become 0.3% based on polyester, and further addition of 0.04 parts of antimony trioxide. The temperature was gradually elevated till it finally reached 285°C, while the pressure was gradually reduced from normal pressure to 1 mmHg.

The reaction was stopped at a point when 3 hours have passed from the start of the reaction, and the polyethylene-2,6-naphthalate composition was discharged out under pressure of nitrogen. The thus obtained polyethylene-2,6-naphthalate composition had an intrinsic viscosity of 0.46 and the specific resistance in molten state of $1.4 \times 10^8$ $\Omega \cdot$cm.

This composition was preliminarily crystallized under nitrogen at 170°C for 2 hours, then dried under 0.3 mmHg at 180°C for 4 hours and subjected to solid-phase polymerization under 0.3 mmHg at 240°C for 11 hours. The resulting polyester composition had an intrinsic viscosity of 0.61.

The polyethylene-2,6-naphthalate composition containing amorphous spherical silica particles obtained from the solid-phase reaction was extruded into a sheet at 295°C and treated according to an electrostatic cooling method to obtain a 110 $\mu$m thick amorphous sheet. This sheet was then stretched 4.0 times in the machine direction and 4.0 times in the transverse direction, and then heat set at 220°C for 5 seconds to obtain a 7 $\mu$m thick biaxially stretched film.

The properties of the film are collectively shown in Table 2 along with those of the succeeding Examples and Comparative Examples.

EXAMPLES B-2 to B-4:

The same operations as in Example B-1 were carried out except for use of the fine spherical silica particles differing in properties. In Example B-4, the amount of amorphous fine spherical silica particles added in polyester was also changed.

EXAMPLE B-5:

The operations of Example B-1 were repeated except that the content of particles was changed to 0.6% based on polyester.

EXAMPLE B-6:

The procedures of Example B-1 were followed except that 0.08 parts of ethyl acid phosphate and 0.09 parts of magnesium acetate tetrahydrate were added after the completion of ester exchange reaction. The obtained composition had a lower specific resistance ($5.1 \times 10^7$ $\Omega \cdot$cm) in the molten state than the composition of Example B-1.

EXAMPLE B-7:

The procedures of Example B-1 were followed except that 0.12 part of ethyl acid phosphate was added after the completion of ester exchange reaction. The specific resistance of the resulting composition in the molten state was $3.2 \times 10^9$ $\Omega \cdot$cm, which was higher than that of the composition of Example B-1.

COMPARATIVE EXAMPLE B-1:

The silica particles (primary particle size: 0.04 $\mu$m) obtained by a dry process were dispersed in ethylene glycol by stirring at 10,000 r.p.m. for one hour by using a homomixer of Tokushu Kika Kogyo. The resulting 5% concentration slurry of the silica particles was filtered with a 7 $\mu$m cut filter, but filtration was difficult. The average particle diameter of the silica particles as measured by centrifugal precipitation method was 0.11 $\mu$m, and the diameter dispersion index ($d_{10}/d_{90}$) was 2.9. The operations of Example B-1 were repreated by using this slurry.

COMPARATIVE EXAMPLE B-2:

The silica particles (primary particle diameter: 0.05 $\mu$m) obtained by a wet process were dispersed in ethylene glycol by stirring at 10,000 r.p.m. for one hour by using a homomixer made by Tokushu Kika Kogyo Co., Ltd. The resulting 5% concentration slurry of the silica particles was filtered with a 10 $\mu$m cut filter, but filtration was difficult. The average particle diameter of the silica particles as measured by a centrifugal precipitation method was 0.21 $\mu$m, and $d_{10}/d_{90}$ = 3.5. By using this slurry, the operations of Example B-1 were repeated.

COMPARATIVE EXAMPLE B-3:

The silica particles obtained by gelation method of silicic acid were dispersed in ethylene glycol by stirring at 10,000 r.p.m. for one hour by using a Tokushu Kika Kogyo homomixer. The resulting 5% concentration slurry of the silica particles was filtered with a 20 $\mu$m cut filter, but filtration was difficult. The average particle diameter of the silica particles as measured by a centrifugal precipitation methcd was 1.85 $\mu$m, and $d_{10}/d_{90}$ was 2.9. By using this slurry, the same operations as in Example B-1 were carried out except that the particle content was adjusted to 0.2%.

In any of the above Comparative Examples, the dispersibility of particles was poor and many coarse protuberances were formed on the film surface.

COMPARATIVE EXAMPLE B-4:

The experiment of Example B-1 was repeated except that the spherical silica particles having an average diameter of 0.70 $\mu$m and a $d_{10}/d_{90}$ value of 2.9 were added in a content of 0.3% in polyester.

Table 2

| EXAMPLE or COMP. EXAMPLE | Inactive particles in polyester | | | | Composition properties | | Film properties | | | | | | General evalua-tion |
|---|---|---|---|---|---|---|---|---|---|---|---|---|---|
| | Type of parti-cle | Average dia-meter *) ($\mu$m) | $d_{10}/d_{90}$ | Content (wt%) | [ $\eta$ ] | specific resistance in molten state ($\Omega \cdot$cm) | Ra ($\mu$m) | Coeffici-ent of friction ($\mu$d) | Disper-sibili-ty | Number of coarse (per 25 cm²) | Winding chara-cter-istics | Wear resis-tance | |
| EXAMPLE B-1 | Spherical silica | 0.30 | 1.5 | 0.3 | 0.61 | $1.4 \times 10^8$ | 0.011 | 0.28 | Good | 3 | ◯ | ◉ | ◯ |
| B-2 | " | 0.06 | 1.6 | 0.3 | 0.62 | $1.6 \times 10^8$ | 0.007 | 0.38 | Good | 1 | ◯ | ◯ | ◯ |
| B-3 | " | 0.51 | 1.5 | 0.3 | 0.62 | $1.4 \times 10^8$ | 0.017 | 0.25 | Good | 3 | ◯ | ◉ | ◯ |
| B-4 | " | 0.80 | 1.5 | 0.2 | 0.63 | $1.3 \times 10^8$ | 0.021 | 0.21 | Good | 7 | ◯ | ◉ | ◯ |
| B-5 | " | 0.30 | 1.5 | 0.6 | 0.62 | $1.4 \times 10^8$ | 0.014 | 0.26 | Good | 5 | ◯ | ◉ | ◯ |
| B-6 | " | 0.30 | 1.5 | 0.3 | 0.61 | $5.1 \times 10^7$ | 0.011 | 0.28 | Good | 3 | ◯ | ◉ | ◯ |
| B-7 | " | 0.30 | 1.5 | 0.3 | 0.61 | $3.2 \times 10^9$ | 0.011 | 0.28 | Good | 2 | ◯ | ◉ | ◯ |
| COMP. EXAMPLE B-1 | Dry pro-cess silica | 0.11 | 2.9 | 0.3 | 0.62 | $1.1 \times 10^8$ | 0.008 | 0.51 | Bad | 23 | ✕ | ✕ | ✕ |
| B-2 | Wet pro-cess silica | 0.21 | 3.5 | 0.3 | 0.62 | $8.7 \times 10^7$ | 0.011 | 0.26 | Rather Bad | 31 | Δ | Δ | ✕ |
| B-3 | Silica by gelation of silicic acid | 1.85 | 2.9 | 0.2 | 0.61 | $1.1 \times 10^8$ | 0.10 | 0.20 | Rather Bad | 58 | ◯ | Δ | ✕ |
| B-4 | Spherical silica | 0.70 | 2.9 | 0.3 | 0.63 | $1.3 \times 10^8$ | 0.020 | 0.21 | Good | 18 | ◯ | ◯ | Δ |

*) Measurements were made by electron microphotographic method for spherical silica particles and by centrifugal precipitation method for other silica particles.

EP 0 257 611 B1

[Preparation of polyester compositions - A]

EXAMPLE C-1:

87 parts of terephthalic acid and 42 parts of ethylene glycol were reacted in the presence of 100 parts of bis-($\beta$-hydroxyethyl)terephthalate oligomer under normal pressure at 260°C to effect esterification. 4 hours later, a polyester oligomer with an esterification rate of 97% was obtained. Then amorphous fine spherical silica particles having an average diameter of 0.30 $\mu$m and a $d_{10}/d_{90}$ value of 1.55 was added so that the content thereof would become 0.5% based on polyester, after which 0.014 parts of ethyl acid phosphate and 0.025 parts of antimony trioxide were added to carry out a polycondensation reaction. As a result, there was obtained a polyester composition having an intrinsic viscosity of 0.661 in 3 hours and 45 minutes.

This polyester composition was dried by heating at 180°C for 6 hours under a nitrogen atmosphere and then extruded into a 150 $\mu$m thick sheet by an extruder, and this sheet was stretched 3.7 times in the machine direction and 4 times in the transverse direction and then heat set at 220°C for 5 seconds to obtain a 10 $\mu$m thick biaxially stretched polyester film. The properties of this polyester film are shown in Table 3. As seen from Table 3, this polyester,film was very excellent in surface roughness, slip characteristics, wear resistance and number of coarse protuberances. Also, the polyester composition of the present invention was quite satisfactory in use as starting resin for the preparation of base film for magnetic recording media, and further the polycondensation time could be reduced by 20 to 30 minutes.

EXAMPLES C-2 to C-4:

Polyester films were obtained in the same way as in Example C-1 except that the average diameter and/or content of amorphous fine spherical silica particles were changed. The properties of these polyester films are shown in Table 3. These polyester films were very excellent in surface roughness, slip characteristics, wear resistance and number of coarse protuberances. Also, the polyester composition of the present invention was quite satisfactory as a starting resin for the preparation of base film for magnetic recording media, and further the polycondensation time could be reduced by 20 to 30 minutes.

Table 3

| | Polyme- rization method | Type of particle | Particle diameter (μm) | diameter disper- sion index $d_{10}/d_{90}$ | Content (%) | Polyme- rization time (hr:min) | Intrin- sic vis- cosity (η) | Surface rough- ness Ra(μm) | Coeffi- cient of friction (μd) | Wear resis- tance | Number of coarse protube- rances (per 25cm$^2$) H$_2$ or greater | General evalu- ation |
|---|---|---|---|---|---|---|---|---|---|---|---|---|
| EXAMPLE C-1 | Direct poly- meri- zation | Spheri- cal silica | 0.30 | 1.55 | 0.5 | 3:45 | 0.661 | 0.013 | 0.27 | ◎ | 5 | ◎ |
| C-2 | " | " | 0.08 | 1.85 | 0.5 | 3:51 | 0.658 | 0.008 | 0.35 | ○ | 2 | ○ |
| C-3 | " | " | 0.50 | 1.73 | 0.3 | 3:54 | 0.665 | 0.017 | 0.26 | ◎ | 7 | ◎ |
| C-4 | " | " | 0.85 | 1.68 | 0.3 | 3:48 | 0.660 | 0.023 | 0.21 | ◎ | 10 | ○ |

[Preparation of polyester compositions - B]

EXAMPLE D-1:

87 parts of terephthalic acid and 42 parts of ethylene glycol were reacted in the presence of 100 parts of bis-($\beta$-hydroxyethyl)terephthalate oligomer under normal pressure at 260°C to effect esterification. 4 hours later, there was obtained a polyester oligomer with an esterification rate of 97%. Then an ethylene glycol slurry of fine spherical silica particles having an average diameter of 0.10 $\mu$m and a $d_{10}/d_{90}$ value of 1.50 was added so that the content of the silica particles would become 0.5% by weight based on polyester, after which 0.014 parts of ethyl acid phosphate, 0.022 parts of antimony trioxide and 0.086 parts of magnesium acetate were added to accomplish a polycondensation reaction. After 3 hours and 50 minutes of polycondensation reaction, there was obtained a polyester composition having an intrinsic viscosity of 0.660.

This polyester composition was dried and melt extruded at 285°C to obtain a 185 $\mu$m thick amorphous film. This film was then stretched 3.5 times in both machine and transvers directions, heat set at 220°C and then cooled to obtain a 15 $\mu$m thick biaxially stretched film.

The properties of this polyester film are shown in Table 4.

As seen from Table 4, this polyester film was very excellent in surface roughness, slip characteristics, number of coarse protuberances and dropout. The polyester composition was also quite satisfactory as a starting material of base film for magnetic recording media.

EXAMPLES D-2 and D-3:

Polyester films were obtained in the same way as in Example D-1 except that the amount of polycondensation catalyst was changed. The properties of these films are shown in Table 4.

EXAMPLE D-4:

A polyester film was obtained in the same way as in Example D-1 except that the amount of polycondensation catalyst and the average diameter and content of fine spherical silica particles were changed. The properties of this film are shown in Table 4.

Table 4

| | Polymerization method | Amount of polycondensation catalyst | | Type of particle | Average diameter [μm] | $d_{10}/d_{90}$ | Particle content [wt%] | Polycondensation time (hour:min) | $[\eta]$ | Surface roughness Ra [μm] | Coefficient of friction [μd] | Wear resistance | Number of coarse protuberances (per 25cm²) $H_2$ or greater | Number of dropouts |
|---|---|---|---|---|---|---|---|---|---|---|---|---|---|---|
| | | Sb[*) | Mg[*) | | | | | | | | | | | |
| EXAMPLE D-1 | Direct esterification method | 1.5 | 4.0 | Fine spherical silica particles | 0.10 | 1.50 | 0.5 | 3:50 | 0.660 | 0.008 | 0.35 | ○ | 2 | 2 |
| D-2 | " | 1.0 | 4.0 | " | " | " | " | 4:00 | 0.658 | 0.008 | 0.35 | ○ | 0-1 | 1 |
| D-3 | " | 0.7 | 6.0 | " | " | " | " | 4:10 | 0.656 | 0.007 | 0.36 | ○ | 0-1 | 1 |
| D-4 | " | 0.7 | 6.0 | " | 0.85 | 1.55 | 0.3 | 4:15 | 0.655 | 0.022 | 0.21 | ◎ | 7 | 5 |

\*)   Sb: total number of moles of antimony per $10^6$ g of polyester.

Mg: total number of moles of magnesium per $10^6$ g of polyester.

EP 0 257 611 B1

[Polyester film - A]

EXAMPLE E-1:

100 parts of dimethyl terephthalate, 70 parts of ethylene glycol, 0.10 part of calcium acetate monohydrate and 0.17 parts of lithium acetate dihydrate were supplied into a reactor, and the mixture was heated to distill off methanol and effect an ester exchange reaction. The temperature was allowed to reach 230°C in about 4 hours from the start of the reaction, at which the ester exchange reaction was substantially completed.

The reaction product was heated to 235°C, then added with 0.30 parts of triethyl phosphate (1.2 equivalents to metallic compound), followed by further addition of 0.05 parts of antimony trioxide, and then polymerized according to a conventional method to obtain a polyester (material A).

Many uniform and fine (0.5 - 1 $\mu$m in diameter) precipitated particles including calcium, lithium and phosphorus elements were seen in the polyester, the amount of such particles being 0.4% by weight based on the polyester.

Separately, there was obtained a polyester composition containing fine spherical silica particles (material B) in the same way as the preparation of material A except that 0.10 part of calcium acetate monohydrate alone was used for the ester exchange reaction, and then 0.04 parts of phosphoric acid, 0.06 parts of fine spherical silica particles having a diameter of 0.7 $\mu$m and 0.05 parts of antimony trioxide were added.

Then the materials A and B were mixed in a blender so that their weight ratio would become 50 to 50, and the mixture was dried and melt extruded at 285°C to obtain a 185 $\mu$m thick amorphous film.

This film was stretched 3.5 times in both machine and transverse directions, heat set at 190°C and then cooled to obtain a 15 $\mu$m thick biaxially stretched film.

The protuberances on the film were measured by a double beam interference method, which showed that the number of coarse protuberances forming interference fringes of 3rd and higher orders was 12 per cm$^2$. The results of evaluations on wear resistance, slip characteristics and dropout of this film are shown in Table 5.

EXAMPLE E-2:

A biaxially stretched polyester film was obtained according to the same process as Example E-1 except that the diameter and content of fine spherical silica particles contained in polyester film were changed as shown in Table 5. The evaluation results of this film are also shown in Table 5.

EXAMPLE E-3:

Another biaxially stretched polyester film was produced by following the process of Example E-1 except that the diameter and content of fine spherical silica particles contained in polyester film were changed as shown in Table 5. The evaluation results of this film are shown in Table 5.

Any of the films according to Examples E-1 to E-3 is very excellent in wear resistance, few in coarse protuberances on the film surface and markedly reduced in dropouts. Slipping properties are also excellent.

The film of Example E-3 is further improved in slip characteristics as it contains the particles of larger diameter (1.5 $\mu$m), but this film is slightly increased in dropouts because of the presence of a greater number of coarse protuberances on the film surface than the films of Examples E-1 and E-2.

29

Table 5

| EXAMPLE | Additive particles contained in film | | | Precipitated particles contained in film | | | Biaxially stretched polyester film | | | | | | | |
|---|---|---|---|---|---|---|---|---|---|---|---|---|---|---|
| | Type | Average diameter (μm) | Content (wt%) | Type | Average diameter (μm) | Content (wt%) | Number of coarse protuberances (per cm²) | | | | | Wear resistance (rank) | Slipping properties (coefficient of kinetic friction, μd) | Dropouts after 20 times of repeated use |
| | | | | | | | 3rd order ($H_3$) | 4th order ($H_4$) | 5th order ($H_5$) | 6th order ($H_6$) | 7th and higher orders | | | |
| E-1 | Spherical silica particles* | 0.7 | 0.03 | Precipitated particles containing Ca,Li and P** | 0.5-1 | 0.4 | 11 | 1 | 0 | 0 | 0 | A | 0.31 | 2 |
| E-2 | " | 0.9 | 0.006 | " | " | " | 12 | 1 | 0 | 0 | 0 | A | 0.30 | 2 |
| E-3 | " | 1.5 | 0.005 | " | " | " | 15 | 1 | 0 | 0 | 0 | A | 0.29 | 4 |

\* Volumetric shape parameter $\Phi v$: 0.5. Deviation from average particle diameter: 3%.

\*\* Containing 1.5% by weight of Ca, 1.5% by weight of Li and 5.0% by weight of P.

[Polyester film - B]

The fine spherical silica particles used in the Examples shown below were obtained according to the following synthesis method.

Synthesis of fine spherical silica particles:

30.4 g of tetramethylsilane was dissolved in methanol and maintained at 20°C (solution A).

On the other hand, 110 g of water was added to 900 g of methanol, to which 243 g of a 28% aqueous ammonia solution was added and mixed, and the mixed solution was maintained at 20°C (solution B).

Solution A was added to solution B while stirring. Immediately thereafter, there took place a hydrolysis and a condensation reaction, and the reaction system became cloudy. After addition of solution A, the mixed solution was further stirred for 2 hours, then added with 103 g of ethylene glycol and heated under reduced pressure to distill off excess water, methanol and ammonia, thereby preparing an ethylene glycol slurry containing fine spherical silica particles in a concentration of 10%. After drying this ethylene glycol slurry, it was photographed through an electron microscope to determine the average particle diameter and diameter dispersion index ($d_{10}/d_{90}$). The average particle diameter was 0.30 $\mu$m and $d_{10}/d_{90}$ = 1.55. Thus, the slurry was composed of uniform spherical particles with highly uniform diameter. The slurry was filtered by using a filter having such a filtering ability as capable of removing the particles of 3 $\mu$m or greater in diameter. The slurry could be passed smoothly through the filter. The particles were used as fine particles (A).

There were also synthesized fine spherical silica particles by the same method as described above except that the mixing ratios of methanol, water and ammonia solution in solution B were changed. These particles had an average diameter of 0.50 $\mu$m and a $d_{10}/d_{90}$ value of 1.27. They were the uniform spherical particles highly uniform in diameter and could be passed smoothly through the above filter. These particles were used as fine particles (B).

EXAMPLE F-1:

100 parts of dimethyl terephthalate, 60 parts of ethylene glycol and 0.09 parts of magnesium acetate tetrahydrate were supplied into a reactor, and the mixture was heated while distilling off methanol to effect an ester exchange reaction. The temperature was raised to 230°C in 4 hours from the start of the reaction, at which the ester exchange reaction was substantially completed.

To the reaction product was added a mixture of the ethylene glycol slurry containing 0.3% of fine particles (A) having an average diameter of 0.30 $\mu$m and the ethylene glycol slurry containing 0.02% of fine particles (B) having an average diameter of 0.50 $\mu$m, which had been previously mixed well, and the resulting mixture was further added with 0.04 parts of ethyl acid phosphate and 0.035 parts of antimony trioxide and subjected to 4-hour polycondensation reaction to obtain a polyethylene terephthalate composition having an intrinsic viscosity of 0.66.

The thus obtained polyester composition was dried by heating at 180°C under a nitrogen atmosphere for 6 hours and extruded into a 150 $\mu$m thick sheet. The sheet was then stretched 3.7 times in the machine direction and 4 times in the transverse direction and heat set at 220°C for 5 seconds to obtain a 10 $\mu$m thick biaxially stretched polyethylene terephthalate film.

The properties of the obtained polyester film are shown in Table 6. As seen from Table 6, this film was very excellent in surface roughness, slipping properties, wear resistance, winding characteristics and number of coarse protuberances, and the polyester composition was also quite satisfactory as a starting material for a base film for magnetic tapes.

EXAMPLES F-2 and F-3:

Other fine spherical silica particles having different average diameters were produced by following the same operations as in Example F-1 except that the mixing ratios of methanol, water and ammonia solution in solution B were changed. Polyester films were obtained by using these particles according to the procedure of Example F-1 by changing the content of the particles. The properties of the obtained polyester films are shown in Table 6. As seen from Table 6, these polyester films were excellent in surface roughness, slip characteristics, wear resistance, winding characteristics and number of coarse protuberances and showed excellent availability as a base film for magnetic tapes.

EXAMPLE F-4:

A polyester film was obtained by following the same operations as in Example F-1 except that fine spherical silica particles (average diameter: 0.30 $\mu$m, $d_{10}/d_{90}$ = 1.55) prepared according to the process of Example F-1 were used as fine particles (A), and that heavy calcium carbonate particles (average diameter:

31

0.50 μ, $d_{10}/d_{90}$ = 2.65) produced by conducting wet crushing, wet classification and filtration in the known ways were used as fine particles (B). The properties of this polyester film are shown in Table 6. As seen from Table 6, this film was excellent in surface roughness, slipping properties, resistance, winding characteristics and number of coarse protuberances and satisfied the property requirement as a base film for magnetic tapes.

Table 6

| | Particle | | | | | | | | | Film properties | | | | | |
|---|---|---|---|---|---|---|---|---|---|---|---|---|---|---|---|
| | Fine particles (A) | | | | Fine particles (B) | | | | | | | | | | |
| | Type | Ave. diameter (μm) | ($d_{10}/d_{90}$) | Content (%) | Type | Ave. diameter (μ) | ($d_{10}/d_{90}$) | $D_2/D_1$ | Content (%) | Surface roughness Ra (μm) | Coefficient of friction (μd) | Wear resistance | Winding characteristics | Number of coarse protuberances per 25 cm² 11.3 or greater | General evaluation |
| EXAMPLE F-1 | Spherical silica | 0.30 | 1.55 | 0.3 | Spherical silica | 0.50 | 1.73 | 1.7 | 0.02 | 0.013 | 0.28 | ◎ | ◎ | 3 | ◎ |
| F-2 | " | 0.50 | 1.73 | 0.3 | " | 0.80 | 1.66 | 1.6 | 0.01 | 0.017 | 0.24 | ◎ | ◎ | 5 | ◎ |
| F-3 | " | 0.08 | 1.85 | 0.3 | " | 0.15 | 1.50 | 1.9 | 0.02 | 0.008 | 0.33 | ◎ | ○ | 2 | ○ |
| F-4 | " | 0.30 | 1.55 | 0.3 | Calcium carbonate | 0.50 | 2.65 | 1.7 | 0.02 | 0.014 | 0.29 | ○ | ○ | 10 | ○ |

[Polyester film - C]

EXAMPLE G-1:

100 parts of dimethyl terephthalate, 60 parts of ethylene glycol and 0.09 parts of magnesium acetate tetrahydrate were supplied into a reactor, and the mixture was heated while distilling off methanol to effect an ester exchange reaction. The temperature was elevated to 230°C in 4 hours from the start of the reaction, at which the ester exchange reaction was substantially completed. To the reaction product was added an ethylene glycol slurry containing 0.3% of spherical silica particles having an average diameter of 0.27 $\mu$m, followed by further addition of 0.04 parts of ethyl acid phosphate and 0.035 parts of antimony trioxide for carrying out polycondensation for 4 hours to obtain a polyethylene terephthalate composition having an intrinsic viscosity of 0.66.

The thus obtained polyester composition was dried by heating at 180°C under a nitrogen atmosphere for 6 hours, then extruded into a sheet by an extruder and cooled by an electrostatic cooling method to prepare a 150 $\mu$m thick amorphous sheet. This sheet was stretched 4 times in the machine direction and 3.5 times in the transverse direction and then further stretched 1.07 times in the machine direction to obtain a 10 $\mu$m thick biaxially stretched film strengthened in the machine direction. The properties of this film are shown in Table 7. The "conforming ratio in friction" in the table is the ratio (%) of the films having a coefficient of friction ($\mu$d) falling within the allowable range of ±5% in deviation from the prescribed value of $\mu$d to the total number of films tested. The films produced according to this Example conformed to the standard in each of the test items: conforming ratio in friction, number of times of break and adhesion of white powder.

EXAMPLES G-2 and G-3:

Stretched polyester films were obtained in the same way as Example G-1 except that the fine spherical silica particles different in the average diameter from those of Example G-1 were used, and that the re-stretch ratio was 1.12 times. The properties of these films are shown in Table 7.

The films obtained in Examples G-2 and G-3 were all satisfactory in conforming ratio in friction, number of times of break and adhesion of white powder.

EXAMPLE G-4:

Pellets of polyethylene-2,6-naphthalate containing 0.3% of fine spherical silica particles of 0.27 $\mu$m in average diameter obtained according to the method of Example G-1 were dried at 170°C under nitrogen for 6 hours. The thus obtained polyester composition was melt extruded by a known method to form a 132 $\mu$m thick non-stretched film, and this film was stretched 4.5 times in the machine direction and 4 times in the transverse direction, and then further stretched 1.05 times in the machine direction to obtain a 7 $\mu$m thick biaxially stretched film strengthened in the machine direction. The properties of this film are shown in Table 7. This film was satisfactory in conforming ratio in friction, number of times of break and adhesion of white powder.

Table 7

| | Type of poly-ester | Inactive particles in polyester | | | Stretch ratio | | | F5 value in machine direction (Kg/cm²) N/mm² | Property values of central por-tion of film | | Property values of side portion of film | | confor-ming ratio in fric-tion(%) | Number of breaks per 100,000 meters | Adhesion of white powder (grad-ing) |
|---|---|---|---|---|---|---|---|---|---|---|---|---|---|---|---|
| | | Type of particle | Diame-ter (µm) | Con-tent (wt%) | MD | TD | re-MD | | Coeffici-ent of friction | Ra (µm) | Coeffici-ent of friction (µd) | Ra (µm) | | | |
| EXAMPLE G-1 | PET *1 | Spheri-cal silica | 0.27 | 0.3 | 4 | 3.5 | 1.07 | (16)156.8 | 0.28 | 0.010 | 0.29 | 0.009 | 100 | 0 | ○ |
| " G-2 | PET | " | 0.43 | 0.3 | 4 | 3.5 | 1.12 | (19)186.2 | 0.26 | 0.016 | 0.27 | 0.015 | 100 | 0 | ○ |
| " G-3 | PET | " | 0.85 | 0.4 | 4 | 3.5 | 1.12 | (19)186.2 | 0.20 | 0.029 | 0.21 | 0.028 | 100 | 1 | ○ |
| " G-4 | PEN *2 | " | 0.27 | 0.3 | 4.5 | 4 | 1.05 | (29)284.2 | 0.30 | 0.008 | 0.32 | 0.007 | 100 | 0 | ○ |

*1: polyethylene terephthalate

*2: polyethylene-2,6-naphthalate

[Polyester film - D]

The spherical silica particles used in the Examples shown below were obtained from the following method.

34

Synthesis of spherical silica particles:

30.4 g of tetramethylsilane was dissolved in 400 g of methanol and maintained at 20°C (solution A).

Separately, 110 g of water was added to 900 g of methanol, followed by addition of 243 g of a 28% aqueous ammonia solution, and the mixed solution was maintained at 20°C (solution B).

Solution A was added to solution B while stirring. Immediately after addition, there took place a hydrolysis and a condensation reaction, and the reaction system became cloudy. After addition of solution A, the mixed solution was further stirred for 2 hours, then added with 103 g of ethylene glycol and heated under reduced pressure to distill off excess water, methanol and ammonia, thereby obtaining an ethylene glycol slurry containing fine spherical silica particles in a concentration of 10%. This ethylene glycol slurry was dried and photographed through an electron microscope, thereby finding that the average particle diameter was 0.09 $\mu$m and $d_{10}/d_{90}$ = 1.45. Thus, the silica particles were composed of uniform particles with an extremely narrow particle size distribution. When the slurry was filtered by using a filter having a filtering ability of 3 $\mu$m cuts, the slurry could be passed smoothly through the filter. These particles were used as fine particles (A). Calcium carbonate particles of 0.27 $\mu$m in average diameter obtained by conducting wet classification and filtration in the known ways were used as particles (B).

EXAMPLE H-1:

100 parts of dimethyl terephthalate, 60 parts of ethylene glycol and 0.09 parts of magnesium acetate tetrahydrate were supplied into a reactor, and the mixture was heated to distill off methanol and to effect an ester exchange reaction. The temperature was raised to 230°C in 4 hours from the start of the reaction, at which the ester exchange reaction was substantially completed. To the reaction product was added well-mixed mixture of the ethylene glycol containing 0.3% of fine particles (A) having an average diameter of 0.09 $\mu$m and the ethylene glycol containing 0.02% of particles (B) having an average diameter of 0.27$\mu$m, followed by further addition of 0.04 parts of ethyl acid phosphate and 0.035 parts of antimony trioxide, and the mixture was polycondensed for 4 hours to obtain a polyethylene terephthalate composition having an intrinsic viscosity of 0.66. The obtained polyester composition was dried by heating at 180°C under a nitrogen atmosphere for 6 hours and then subjected to extrusion to form a 150 $\mu$m thick sheet. The sheet was stretched 3.7 times in the machine direction and 4 times in the transverse direction and heat set at 220°C for 5 seconds to obtain a 10 $\mu$m thick biaxially stretched polyethylene terephthalate film.

The properties of this film are shown in Table 8. As seen from Table 8, this film was very excellent in surface roughness, slipping properties, wear resistance, winding characteristics, number of coarse protuberances and resistant to scratching. This film was well appliable as a base film for magnetic recording media.

EXAMPLES H-2 - H-5:

Fine spherical silica particles having an average diameter of 0.20 $\mu$m and a $d_{10}/d_{90}$ of 1.56 were obtained according to the process of Example H-1 except for changing the mixing ratios of methanol, water and ammonia solution in solution B, and a polyester film was obtained in the same way as Example H-1 except that the obtained fine silica particles were used as fine particles (A) in an amount of 0.3% and the particles shown in Table 8 were added as particles (B) in an amount of 0.02%.

The properties of the obtained film are shown in Table 8. As seen from Table 8, any of the films obtained in Examples H-1 to H-5 was very excellent in surface roughness, slipping properties, wear resistance, winding characteristics, number of coarse protuberances and resistance to scratching and could well applicable as a base film for magnetic recording media.

Table 8

| | Particles added | | | | | | | | | Film properties | | | | | | |
|---|---|---|---|---|---|---|---|---|---|---|---|---|---|---|---|---|
| | Fine particles (A) | | | | Fine particles (B) | | | | | Surface rough-ness [Ra] ($\mu$m) | Coefficient of friction [$\mu$d] | Wear resis-tance | Wind-ing charac-teris-tics | Number of coarse protube-rances per 25 cm² | Resis-tance to scrat-ching (%) | General evalu-tion |
| | Type | Diameter ($\mu$m) | (d$_{10}$/d$_{90}$) | Content (wt%) | Type | Mohs hard-ness | Diameter ($\mu$m) | $D_2/D_1$ | Content (wt%) | | | | | | | |
| EXAMPLE H-1 | Spherical silica | 0.09 | 1.45 | 0.3 | Calcium carbonate | 3.0 | 0.27 | 3.0 | 0.02 | 0.008 | 0.34 | ◎ | ◎ | 2 | 0.1 | ◎ |
| H-2 | " | 0.20 | 1.56 | 0.3 | " | 3.0 | 0.42 | 2.1 | 0.02 | 0.010 | 0.30 | ◎ | ◎ | 4 | 0.5 | ◎ |
| H-3 | " | 0.20 | 1.56 | 0.3 | Barium sulfate | 3.0 | 0.45 | 2.3 | 0.02 | 0.011 | 0.30 | ◎ | ◎ | 7 | 0.6 | ◎ |
| H-4 | " | 0.20 | 1.56 | 0.3 | Magnesium hydroxide | 2.5 | 0.35 | 1.8 | 0.02 | 0.010 | 0.31 | ◎ | ◎ | 6 | 0.4 | ◎ |
| H-5 | " | 0.20 | 1.56 | 0.3 | Zinc oxide | 4.0 | 0.50 | 2.5 | 0.02 | 0.011 | 0.31 | ◎ | ◎ | 8 | 1.5 | ○ |

[Film for magnetic recording media - A]

EXAMPLES I-1 - I-5:

100 parts of dimethyl terephthalate, 60 parts of ethylene glycol and 0.09 parts of magnesium acetate tetrahydrate were supplied into a reactor, and the mixture was heated while distilling off methanol to effect an ester exchange reaction. The temperature was raised to 230°C in 4 hours from the start of the reaction, at which the ester exchange reaction was substantially completed.

To the reaction product was added 7.5 parts of ethylene glycol slurry of fine spherical silica particles described in Table 9, followed by further addition of 0.04 parts of ethyl acid phosphate and 0.04 parts of antimony trioxide to carry out a polycondensation reaction for 4 hours to obtain a polyethylene terephthalate composition.

This polyester composition was vacuum dried, extruded into a sheet at 290°C from an extruder and cooled by an electrostatic cooling method to form a 200 μm amorphous sheet. This amorphous sheet was stretched 3.7 times in the machine direction by a multi-stage machine direction stretcher, then stretched 4.0 times in the transverse direction by a tenter and then heat set in the temperature range of 200°C or higher to obtain a 14 μm thick biaxially stretched film. The properties of this film and the properties of the magnetic tape made therefrom are shown in Table 9.

EP 0 257 611 B1

Table 9

| | Inactive particles in polyester film | | | | | | Refractive index of film | | Film properties | | | | Properties of magnetic tape | | General evaluation |
|---|---|---|---|---|---|---|---|---|---|---|---|---|---|---|---|
| | Type of parti-cle | Diame-ter (μm) | Content (wt%) | $d_{10}/d_{90}$ | Volu-metric shape para-meter | Specific surface area ratio | In thick-nesswise direction (nα) | Average ($\bar{n}$) | Handling character-istics | Wear resis-tance | Number of coarse protube-rances per 100cm² | Number of broken protube-rances per nm² | Elect-rical proper-ties (dB) | Dropout (Dψ) per min | |
| EXAMPLE I-1 | Silica | 0.20 | 0.60 | 1.20 | 0.50 | 15 | 1.496 | 1.602 | ◯ | A | 6 | 1 | +2.7 | 1.5 | ◯ |
| " I-2 | " | 0.30 | 0.40 | 1.06 | " | 24 | " | 1.603 | ◯ | A | 5 | 1 | +2.5 | 1.3 | ◯ |
| " I-3 | " | 0.55 | 0.20 | 1.12 | " | 53 | " | 1.604 | ◯ | A | 7 | 2 | +1.4 | 0.5 | ◯ |
| " I-4 | " | 0.75 | " | 1.15 | 0.48 | 41 | 1.500 | " | ◯ | A | 8 | 4 | +0.5 | 1.3 | ◯ |
| " I-5 | " | 0.85 | 0.10 | 1.17 | 0.46 | 67 | 1.498 | " | ◯ | A | 10 | 6 | 0.0 | 1.9 | ◯ |

38

[Film for magnetic recording media - B]

EXAMPLES J-1 - J-5:

100 parts of dimethyl terephthalate, 60 parts of ethylene glycol and 0.18 parts of magnesium acetate tetrahydrate were supplied into a reactor, and the mixture was heated while distilling off methanol to effect an ester exchange reaction. The temperature was raised to 230°C in 4 hours from the start of the reaction, at which the ester exchange reaction was substantially completed.

To the reaction product was added 7.5 parts of an ethylene glycol slurry of fine spherical silica particles shown in Table 10, followed by further addition of 0.04 parts of ethyl acid phosphate and 0.04 parts of antimony trioxide to carry out a polycondensation reaction for 4 hours, thereby obtaining ethylene terephthalate compositions.

Each of these polyester compositions was vacuum dried, extruded into a sheet at 290°C and cooled by an electrostatic cooling method to form a 200 $\mu$m thick amorphous sheet. This amorphous sheet was then stretched 3.7 times in the machine direction by a multi-stage machine direction stretcher, further stretched 4.0 times in the transverse direction by a tenter and then heat set in a temperature range of 200°C or over to obtain a 14 $\mu$m thick biaxially stretched film. The properties of the obtained films and the properties of the magnetic tapes made therefrom are shown in Table 10.

Any of the films of Examples J-1 to J-5 could be rolled up after slit in a very favorable way with no non-uniformity at the end face and no wrinkle on the film. Also, the film suffered from no wear and scratches which could usually be caused when roll up the magnetic tape in the magnetic tape forming process, and the deposition of white powder on the calendering rolls was slight. Further, the magnetic tapes formed from the films had excellent electro-magnetic transducing characteristics and running property.

Table 10

| | | Inactive particles in polyester | | | $\rho\nu$ (X10$^7$ $\Omega$.cm) | Film properties | | | | | Magnetic tape properties | | | General evalu-ation |
|---|---|---|---|---|---|---|---|---|---|---|---|---|---|---|
| | Type | Diame-ter ($\mu$m) | Con-tent (wt%) | $d_{10}/d_{90}$ | | Double refrac-tive index $\Delta n$ ($\times 10^3$) | Number of broken protuber-ances per mm$^2$ | Coeffici-ent of kinetic friction ($\mu$d) | Ra ($\mu$m) | Wear resis-tance | S/N (dB) | Dropout (per min) | Skew ($\mu$sec) | |
| EXAMPLE J-1 | Silica | 0.27 | 0.30 | 1.10 | 3.0 | 0.8 | 2 | 0.28 | 0.010 | A | +4.0 | 1.5 | 8 | ◯ |
| J-2 | " | 0.43 | 0.30 | 1.15 | 3.5 | 3.2 | 1 | 0.26 | 0.016 | A | +2.5 | 1.3 | 7 | ◯ |
| J-3 | " | 0.58 | 0.40 | 1.07 | 2.1 | 5.1 | 3 | 0.23 | 0.021 | A | +1.4 | 2.1 | 8 | ◯ |
| J-4 | " | 0.75 | 0.20 | 1.18 | 4.0 | 2.0 | 4 | 0.22 | 0.020 | A | +0.5 | 1.8 | 6 | ◯ |
| J-5 | " | 0.90 | 0.10 | 1.20 | 2.7 | 0.2 | 6 | 0.21 | 0.022 | A | 0.0 | 3.2 | 9 | ◯ |

[Film for magnetic recording media - C]

EXAMPLE K-1:

100 parts of dimethyl terephthalate, 70 parts of ethylene glycol and 0.10 part of calcium acetate monohydrate were supplied into a reactor, and the mixture was heated while distilling off methanol to effect an ester exchange reaction. The temperature was allowed to reach 230°C in about 4 hours from the start of the reaction, at which the ester exchange reaction was substantially completed.

This reaction product was further heated to 235°C and added with 0.04 parts of phosphoric acid and 0.3 parts of fine silica particles (average diameter: 0.30 $\mu$m, $d_{10}/d_{90}$ = 1.4, $\phi_v$ = 0.51) as a slurry in ethylene glycol, followed by further addition of 0.05 parts of antimony trioxide, and the mixture was subjected to a polymerization reaction according to a conventional method. That is, after addition of antimony trioxide, the temperature of the reaction system was gradually raised till reaching 285°C while the pressure was gradually reduced from normal pressure to 1 mmHg. After 4 hours of reaction, the reaction system was returned to normal pressure to obtain a polyester composition (polyester composition A).

Polyester composition A contained 0.30 parts by weight (to 100 parts by weight of polyester) of fine silica particles.

The thus obtained chip-formed polyester composition A was dried, extruded into a sheet at 290°C by an extruder and cooled by an electrostatic cooling method to form an amorphous sheet. This sheet was stretched 3.2 times in the machine direction and 3.7 times in the transverse direction and then heat treated at 215°C to obtain a biaxially oriented film having a thickness of 75 $\mu$m.

EXAMPLES K-2 and K-3:

Polyester compositions were obtained in the same way as in Example K-1 except for changing fine silica particles added. That is, in Example K-2, the average particle diameter was changed to 0.50 $\mu$m, and in Example K-3, the average particle diameter was changed to 0.70 $\mu$m and the particle content was changed to 0.25 parts by weight.

The compositions were subjected to the same treatments as in Example K-1 to obtain biaxially oriented films having a thickness of 75 $\mu$m.

It is seen from Examples K-1 to K-3 that the addition of spherical silica particles of the present invention can greatly reduce the number of the coarse particle protuberances on the film surface while maintaining good slip characteristics and wear resistance, and as a result, there can be obtained a base film for magnetic disc having excellent magnetic disc properties, especially very few dropouts.

As seen from the above results, the oriented polyeser film of the present invention is best suited for use as a base film for magnetic discs, especially high-density recording floppy discs.

Table 11

| | | Fine particles | | | | Results of measurements and evaluations | | | | | | |
|---|---|---|---|---|---|---|---|---|---|---|---|---|
| | Type | Average diameter (μm) | $d_{10}/d_{90}$ | $\phi_v$ | Content (wt parts to 100 wt parts of PET) | Surface quality | | | Slipping proper-ties | Wear resis-tance | Magnetic disc properties | |
| | | | | | | Ra (μm) | Number of coarse protuber-ances per 25 cm$^2$ | | | | Output | Drop-outs |
| | | | | | | | $H_2$ | $H_3$ or greater | | | | |
| EXAMPLE K-1 | Silica (external addition) | 0.30 | 1.4 | 0.51 | 0.30 | 0.009 | 0 | 0 | Good | ◯ | ◯ | 0.10 |
| K-2 | " | 0.50 | 1.4 | 0.51 | 0.30 | 0.010 | 2 | 0 | Good | ◯ | ◯ | 0.15 |
| K-3 | " | 0.70 | 1.4 | 0.51 | 0.25 | 0.010 | 4 | 0 | Good | ◯ | ◯ | 0.20 |

EP 0 257 611 B1

[Film for magnetic recording media - D]

EXAMPLE L-1:

100 parts of dimethyl terephthalate, 60 parts of ethylene glycol and 0.09 parts of magnesium acetate tetrahydrate were supplied into a reactor, and the mixture was hated while distilling off methanol to effect an ester exchange reaction. The temperature was raised to 230°C in 4 hours from the start of the reaction, at which the ester exchange reaction was substantially completed.

To the reaction product was added 15 parts of an ethylene glycol slurry containing fine spherical silica particles of 0.27 μm in average diameter, followed by addition of 0.04 parts of ethyl acid phosphate and 0.04 parts of antimony trioxide for carrying out polycondensation reaction for 4 hours, resultantly obtaining a polyethylene terephthalate composition.

The thus obtained polyester composition was dried by heating at 180°C under a nitrogen atmosphere, then melt extruded into a sheet by an extruder and cooled by an electrostatic cooling method to obtain a 200 μm thick amorphous sheet. This sheet was then stretched 3.7 times in the machine direction by a machine direction stretcher, further stretched 4.0 times in th transeverse direction by a tenter and heat set in the temperature range of 200°C or over to obtain a 14 μm thick biaxially stretched film.

200 parts of fine powder of a ferromagnetic alloy (Fe-Co-B), 30 parts of polyurethane resin, 10 parts of nitrocellulose, 10 parts of vinyl chloride-vinyl acetate copolymer, 5 parts of lecithin, 100 parts of cyclohexanone, 100 parts of methyl isobutyl ketone and 300 parts of methyl ethyl ketone were mixed and dispersed in a ball mill for 48 hours, and then 5 parts of polyisocyanate compound was added to prepare a magnetic coating material. Said biaxially stretched film was coated with this magnetic coating material, magnetically oriented before the coat was sufficiently dried and solidified, and then dried. This coated film was supercalendered and slit to a width of 1/2 inch to form a video tape.

The properties of the film and the magnetic recording tape obtained in the manner described above are shown in Table 12. The film has satisfied the requirements of the present invention for Ra, Rt/Ra and number of broken protuberances and was excellent in electromagnetic transducing characteristics as a magnetic tape, handling characteristics in coating and calendering steps, and wear resistance.

EXAMPLES L-2 to L-4:

Magnetic recording tapes were made according to the same process as in Example L-1 except for use of fine spherical silica particles different in average diameter and content as shown in Table 12. The properties of these magnetic tapes are shown in Table 12. As seen from Table 12, the magnetic recording tapes of Examples L-2 to L-4 all had excellent properties.

EXAMPLE L-5:

A magnetic recording tape was obtained according to the same process as in Example L-1 except that dimethyl terephthalate was changed to dimethyl naphthalene to form a polyethylene naphthalate composition, and that this composition was made into a 14 μm thick biaxially stretched film. The properties of the obtained magnetic tape are shown in Table 12. This tape was as excellent in handling characteristics, wear resistance and elctromagnetic transducing characteristics as the magnetic recording tape obtained in Example L-1.

Table 12

| | Type of base film | Inactive particles in base film | | | Base film surface condition | | | Coating and calendering characteristics | | Magnetic tape characteristics | |
|---|---|---|---|---|---|---|---|---|---|---|---|
| | | Type | Average diameter ($\mu$m) | Content (wt%) | Ra ($\mu$m) | Rt/Ra | Number of broken protuberances per mm$^2$ | Coefficient of friction ($\mu$d) | Fouling of calender roll | S/N (dB) | Dropouts (per min) |
| EXAMPLE L-1 | Polyethylene terephthalate | Spherical silica | 0.27 | 0.3 | 0.009 | 12 | 3 | 0.22 | ◯ | +1.5 | 3 |
| " L-2 | " | " | 0.43 | 0.2 | 0.012 | 9 | 6 | 0.20 | ◯ | +0.0 | 5 |
| " L-3 | " | " | 0.16 | 0.3 | 0.007 | 10 | 1 | 0.25 | ◯ | +2.0 | 2 |
| " L-4 | " | " | 0.35 | 0.2 | 0.011 | 13 | 3 | 0.20 | ◯ | +0.9 | 4 |
| " L-5 | Polyethylene naphthalate | " | 0.27 | 0.3 | 0.010 | 14 | 2 | 0.23 | ◯ | +1.5 | 5 |

[Film for capacitors - A]

EXAMPLE M-1:

100 parts of dimethyl terephthalate, 60 parts of ethylene glycol and 0.03 parts of manganese acetate tetrahydrate were supplied into a reactor, and the mixture was heated while distilling off methanol to effect an ester exchange reaction. The reaction was substantially completed when the temperature reached 230°C in 4 hours after the start of the reaction.

To the reaction product was added an ethylene glycol slurry containing 10% of fine spherical silica particles having an average diameter of 0.27 $\mu$m, followed by further addition of 0.021 parts of ethyl acid phosphate and 0.035 parts of antimony trioxide for carrying out polycondensation for 4 hours to obtain a polyethylene terephthalate composition having an intrinsic viscosity of 0.66. The content of said silica particles was 0.5% (based on polyester).

The obtained polyester composition was dried by heating at 180°C under a nitrogen atmosphere for 6 hours, then extruded into a sheet through an extruder and cooled by an electrostatic cooling method to form a 24 $\mu$m thick amorphous sheet. This sheet was stretched 4 times in both machine and transverse directions to obtain a 1.5 $\mu$m thick biaxially stretched film.

The properties of this film and the electrical properties of the capacitor made therefrom are shown in Table 13. Both the film properties and the electrical properties of the capacitor were quite satisfactory.

EXAMPLES M-2 and M-3:

Biaxially stretched films were obtained by following the process of Example M-1 except for using the fine spherical silica particles having average diameters shown in Table 13, which were prepared by different conditions. The properties of these films and the electrical properties of the capacitors made therefrom are shown in Table 13. Both the film properties and the electrical properties of the capacitors were excellent.

Table 13

EP 0 257 611 B1

| | Inactive particles added | | | Film properties | | | Electrical properties of capacitor | | |
|---|---|---|---|---|---|---|---|---|---|
| | Type | Diameter (μm) | Content (wt%) | Number of protube-rances (per $mm^2$ x $10^3$) | Coefficient of kinetic friction (μd) | Δd (μm) | Capacity (μF) | Dielectric strength (kV) | Life (%) |
| EXAMPLE M-1 | Spherical silica | 0.27 | 0.5 | 50 | 0.57 | 0.15 | 0.62 | 1.2 | 98 |
| " M-2 | " | 0.54 | 0.6 | 45 | 0.40 | 0.23 | 0.55 | 1.1 | 97 |
| " M-3 | " | 0.85 | 0.7 | 30 | 0.35 | 0.32 | 0.53 | 1.0 | 96 |

[Film for capacitors - B]

EXAMPLE N-1:

100 parts of dimethyl terephthalate, 60 parts of ethylene glycol and 0.03 parts of manganese acetate tetrahydrate were supplied into a reactor, and the mixture was heated while distilling off methanol to effect an ester exchange reaction. The temperature was raised to 230°C in 4 hours from the start of the reaction, at which the ester exchange reaction was substantially completed.

To the reaction product was added 15 parts of an ethylene glycol slurry containing the fine spherical silica particles having an average diameter of 0.75 $\mu$m, followed by further addition of 0.021 parts of ethyl acid phosphate and 0.04 parts of antimony trioxide, and the mixture was subjected to 4-hour polycondensation reaction to obtain a polyethylene terephthalate composition.

The obtained polyester composition was dried by heating at 180°C under a nitrogen atmosphere, then melt extruded into a sheet by an extruder and cooled by an electrostatic cooling method to form a 60 $\mu$m thick amorphous sheet. This sheet was stretched 3.7 times in the machine direction by a machine direction stretcher, then stretched 4.0 times in the transverse direction by a tenter and heat set in the temperature range of 200°C or over to obtain a 5 $\mu$m thick biaxially stretched film. The melt specific resistance of this film was $9.5 \times 10^8$ $\Omega \cdot$cm.

Aluminum was deposited on the obtained film by a vacuum depositing apparatus. This aluminum-deposited film was slit to a width of 15 mm and subjected to an element winding machine by which two pieces of slit tape having different size of right and left non-deposited sides (margins) were piled and wound together to make a capacitor element. This capacitor element was then subjected to pressing, heat treatment, end sealing and connection of lead wires to make a capacitor having a capacity of 0.1 $\mu$F.

The properties of the thus obtained capacitor and polyester film are shown in Table 14. There were observed no such defects as "shrinkage", "wrinkling" and "ununiformity of the winding surface" in the steps of depositing, element winding and calendering in the capacitor producing process. Also, the electrical properties of the capacitor were excellent.

EXAMPLES N-2 and N-3:

Capacitors were made by following the procedure of Example N-1 except that the preparation conditions of fine spherical silica particles were slightly changed and the particles having the average diameters shown in Table 14 were used. The properties of the obtained capacitors are shown in Table 14. These capacitors conforming to the requirements of the present invention had the excellent electrical properties.

47

Table 14

| EXAMPLE | Inactive particles contained in polyester | | | | Melt specific resistance of polyester ($\Omega\cdot$cm) | Coefficient of kinetic friction of film ($\mu$d) | Electrical properties of capacitor | | | General evaluation |
|---|---|---|---|---|---|---|---|---|---|---|
| | Type | Average diameter ($\mu$m) | Content (wt%) | $d_{10}/d_{90}$ | | | High-temperature CR value ($\Omega\cdot$F) | Dielectric strength (kV) | Life characteristics (%) | |
| N-1 | Spherical silica | 0.75 | 0.40 | 1.5 | $9.5\times10^8$ | 0.34 | $4.5\times10^2$ | 2.1 | 95 | ◯ |
| N-2 | " | 1.0 | 0.30 | 1.6 | 15.0 | 0.32 | 4.1 | 1.9 | 94 | ◯ |
| N-3 | " | 0.65 | 0.40 | 1.4 | 12.0 | 0.35 | 4.8 | 2.3 | 96 | ◯ |

**Claims**
**Claims for the following Contracting States : AT, BE, CH, ES, GR, IT, LI, LU, NL, SE**

1. A process for preparing a polyester composition in which 80 % by mole or more of the constitutional repeating units of the polyester are constituted by ethylene terephthalate units or ethylene 2,6-naphthalate units and containing spherical silica particles, which comprises

    subjecting terephthalic acid or naphthalene-2,6-dicarboxylic acid or esters thereof and ethylene glycol to an esterification reaction,

    subjecting the reaction product of said esterification reaction to polycondensation reaction in the presence of antimony (Sb) compounds and/or magnesium (Mg) compounds as a catalyst in an amount defined by the following formulae (4) - (6):

    $$0 \leq Sb \leq 1.5 \qquad (4)$$

    $$0 \leq Mg \leq 10 \qquad (5)$$

    $$0.5 \leq 6Sb + Mg \leq 15 \qquad (6)$$

    wherein Sb is the total number of moles of antimony compounds per $10^6$ grams of the polyester, and Mg is the total number of moles of magnesium compounds per $10^6$ grams of the polyester, and

    adding said spherical silica particles at any stage till the initial polycondensation reaction is completed, i. e. at a stage at which the intrinsic viscosity of the reaction product is 0.2 or below, in an amount of 0.001 to 5 % by weight based on the polyester to be produced, said particles being amorphous, being obtained by subjecting alkoxysilane to hydrolysis reaction and condensation reaction in the presence of an amine type catalyst, and having an average diameter of 0.01 to 3.0 $\mu$m, and the diameter dispersion index of said particles represented by the following formula (1) being in the range of 1.1 to 2.7:

    $$d_{10}/d_{90} \qquad (1)$$

    wherein $d_{10}$ is the diameter of the particle when the cumulative number thereof is 10 % of the total number of said particles, $d_{90}$ is the diameter of the particle when the cumulative number thereof is 90 % of the total number of said particles, and $d_{10}$ and $d_{90}$ are measured under an electron microscope, said cumulative numbers being calculated beginning with the largest particle size.

2. The process for preparing a polyester composition according to claim 1, wherein the fine spherical silica particles comprise 90 % by weight or more of silicon dioxide.

3. A polyester film which contains 0.001 to 5 % by weight based on the polyester of spherical silica particles, wherein said silica particles have been obtained by subjecting alkoxysilane to hydrolysis reaction and condensation reaction in the presence of an amine type catalyst, said silica particles being amorphous and having an average diameter of 0.01 to 3.0 $\mu$m, a diameter dispersion index of said particles represented by the following formula (1) being in the range of 1.1 to 2.7:

    $$d_{10}/d_{90} \qquad (1)$$

    wherein $d_{10}$ is the diameter of the particle when the cumulative number thereof is 10 % of the total number of said particles, $d_{90}$ is the diameter of the particle when the cumulative number thereof is 90% of the total number of said particles, and $d_{10}$ and $d_{90}$ are measured under an electron microscope, said cumulative numbers being calculated beginning with the largest particle size.

4. The polyester film according to claim 3, which contains in addition to the spherical silica particles (hereinafter referred to as particles (A)), 0.005 to 1.0 % by weight of particles (B-1) other than silica particles (A) the ratio ($D_2/D_1$) being in the range of 1.1 to 3.0:

$$(D_2/D_1) = \frac{\text{average diameter of fine particles (B-1)}}{\text{average diameter of fine particles (A)}}$$

wherein $D_2$ is the average diameter of particles (B-1) and $D_1$ is the average diameter of particles (A), the Mohs hardness of said particles (B-1) being 4.0 or below.

5. Use of the polyester film according to claim 3 or 4 for magnetic recording media or capacitors.

**Claims for the following Contracting States : DE, FR, GB**

1. A process for preparing a polyester composition in which 80 % by mole or more of the constitutional repeating units of the polyester are constituted by ethylene terephthalate units or ethylene 2,6-naphthalate units and containing spherical silica particles, which comprises

subjecting terephthalic acid or naphthalene-2,6-dicarboxylic acid or esters thereof and ethylene glycol to an esterification reaction,

subjecting the reaction product of said esterification reaction to polycondensation reaction in the presence of antimony (Sb) compounds and/or magnesium (Mg) compounds as a catalyst in an amount defined by the following formulae (4) - (6):

$0 \leq Sb \leq 1.5$     (4)

$0 \leq Mg \leq 10$     (5)

$0.5 \leq 6Sb + Mg \leq 15$     (6)

wherein Sb is the total number of moles of antimony compounds per $10^6$ grams of the polyester, and Mg is the total number of moles of magnesium compounds per $10^6$ grams of the polyester, and

adding said spherical silica particles at any stage till the initial polycondensation reaction is completed, i. e. at a stage at which the intrinsic viscosity of the reaction product is 0.2 or below, in an amount of 0.001 to 5 % by weight based on the polyester to be produced, said particles being amorphous, being obtained by subjecting alkoxysilane to hydrolysis reaction and condensation reaction in the presence of an amine type catalyst, and having an average diameter of 0.01 to 3.0 $\mu$m, and the diameter dispersion index of said particles represented by the following formula (1) being in the range of 1.1 to 2.7:

$d_{10}/d_{90}$     (1)

wherein $d_{10}$ is the diameter of the particle when the cumulative number thereof is 10 % of the total number of said particles, $d_{90}$ is the diameter of the particle when the cumulative number thereof is 90 % of the total number of said particles, and $d_{10}$ and $d_{90}$ are measured under an electron microscope, said cumulative numbers being calculated beginning with the largest particle size.

2. The process for preparing a polyester composition according to claim 1, wherein the fine spherical silica particles comprise 90 % by weight or more of silicon dioxide.

3. A polyester film consisting of the polyester composition prepared according to claims 1 or 2.

4. The polyester film according to claim 3, which contains in addition to the spherical silica particles (hereinafter referred to as particles (A)), 0.005 to 1.0 % by weight of particles (B-1) other than silica particles (A) the ratio $(D_2/D_1)$ being in the range of 1.1 to 3.0: wherein $D_2$ is the average diameter of particles (B-1) and $D_1$ is the average diameter of particles (A), the Mohs hardness of said particles (B-1) being 4.0 or below.

5. Use of the polyester film according to claim 3 or 4 for magnetic recording media or capacitors.

**Patentansprüche**

**Patentansprüche für folgende Vertragsstaaten : AT, BE, CH, ES, GR, IT, LI, LU, NL, SE**

1. Verfahren zur Herstellung einer Polyesterzusammensetzung, in welcher 80 Mol-% oder mehr der aufbauenden wiederholenden Einheiten des Polyesters aus Ethylenterephthalateinheiten oder Ethylen-2,6-naphthalateinheiten gebildet sind, und welche sphärische Siliciumoxidteilchen enthält, umfassend Unterziehen von Terephthalsäure oder Naphthalin-2,6-dicarbonsäure oder Estern davon und Ethylenglykol einer Veresterungsreaktion.

   Unterziehen des Reaktionsprodukts dieser Veresterungsreaktion einer Polykondensationsreaktion in Gegenwart von Antimon (Sb)-Verbindungen und/oder Magnesium (Mg)-Verbindungen als Katalysator in einer durch die folgenden Formeln (4)-(6) definierten Menge:

   $$0 \leq Sb \leq 1,5 \qquad (4)$$

   $$0 \leq Mg \leq 10 \qquad (5)$$

   $$0,5 \leq 6Sb + Mg \leq 15 \qquad (6)$$

   worin Sb die Gesamtmolanzahl an Antimonverbindungen pro $10^6$ Gramm des Polyesters und Mg die Gesamtmolanzahl an Magnesiumverbindungen pro $10^6$ Gramm des Polyesters sind, und Zugeben der sphärischen Siliciumoxidteilchen bei einer beliebigen Stufe, bis die anfängliche Polykondensationsreaktion vervollständigt ist, das heißt bei einer Stufe, bei welcher die Grenzviskosität des Reaktionsprodukts 0,2 oder niedriger ist, in einer Menge von 0,001 bis 5 Gew.-%, bezogen aufden herzustellenden Polyester, wobei die Teilchen amorph sind, durch Unterziehen eines Alkoxysilans der Hydrolysereaktion und Kondensationsreaktion in Gegenwart eines Katalysators vom Amin-Typ erhalten worden sind und einen Durchschnittsdurchmesser von 0,01 bis 3,0 $\mu$m besitzen, und wobei der Durchmesser-Dispersionsindex dieser Teilchen, wie durch die folgende Formel (1) angegeben, im Bereich von 1,1 bis 2,7 liegt:

   $$d_{10}/d_{90} \qquad (1)$$

   worin $d_{10}$ der Durchmesser des Teilchens ist, wenn dessen Summenanzahl 10% der Gesamtanzahl der Teilchen ausmacht, $d_{90}$ der Durchmesser des Teilchens ist, wenn dessen Summenanzahl 90 % der Gesamtanzahl der Teilchen ausmacht, und wobei $d_{10}$ und $d_{90}$ unter einem Elektronenmikroskop gemessen werden, wobei die Summenanzahlen in der Weise berechnet werden, daß mit der größten Teilchengröße begonnen wird.

2. Verfahren zur Herstellung einer Polyesterzusammensetzung nach Anspruch 1, wobei die feinen sphärischen Siliciumoxidteilchen 90 Gew.-% oder mehr Siliciumdioxid umfassen.

3. Polyesterfolie, welche 0,001 bis 5 Gew.-%, bezogen auf den Polyester, sphärische Siliciumoxidteilchen enthält, wobei die Siliciumoxidteilchen durch Unterziehen eines Alkoxysilans der Hydrolysereaktion und Kondensationsreaktion in Gegenwart eines Katalysators vom Amin-Typ erhalten worden sind, die Siliciumoxidteilchen amorph sind und einen Durchschnittsdurchmesser von 0,01 bis 3,0 $\mu$m besitzen, der Durchmesser-Dispersionsindex der Teilchen, wie durch die folgende Formel (1) angegeben, im Bereich von 1,1 bis 2,7 liegt:

   $$d_{10}/d_{90} \qquad (1)$$

   worin $d_{10}$ der Durchmesser des Teilchens ist, wenn dessen Summenanzahl 10% der Gesamtanzahl der Teilchen ausmacht, $d_{90}$ der Durchmesser des Teilchens ist, wenn dessen Summenanzahl 90 % der Gesamtanzahl der Teilchen ausmacht, und wobei $d_{10}$ und $d_{90}$ unter einem Elektronenmikroskop gemessen werden, wobei die Summenanzahlen in der Weise berechnet werden, daß mit der größten Teilchengröße begonnen wird.

4. Polyesterfolie nach Anspruch 3, welche zusätzlich zu den sphärischen Sliciumoxidteilchen (nachfolgend als Teilchen (A) bezeichnet) 0,005 bis 1,0 Gew.-% Teilchen (B-1), welche von den Siliciumoxidteilchen (A) verschieden sind, enthält, wobei das Verhältnis $(D_2/D_1)$ im Bereich von 1,1 bis 3,0 liegt:

$$(D_2/D_1) = \frac{\text{Durchschnittsdurchmesser der feinen Teilchen (B-1)}}{\text{Durchschnittsdurchmesser der feinen Teilchen (A)}}$$

worin $D_2$ der Durchschnittsdurchmesser der Teilchen (B-1) und $D_1$ der Durchschnittsdurchmesser der Teilchen (A) ist, wobei die Mohs-Härte der Teilchen (B-1) 4,0 oder weniger beträgt.

5. Verwendung der Polyesterfolie nach Anspruch 3 oder 4 für magnetische Aufzeichnungsmedien oder Kondensatoren.

**Patentansprüche für folgende Vertragsstaaten: DE, FR, GB**

1. Verfahren zur Herstellung einer Polyesterzusammensetzung, in welcher 80 Mol-% oder mehr der aufbauenden wiederholenden Einheiten des Polyesters aus Ethylenterephthalateinheiten oder Ethylen-2,6-naphthalateinheiten gebildet sind, und welche sphärische Siliciumoxidteilchen enthält, umfassend Unterziehen von Terephthalsäure oder Naphthalin-2,6-dicarbonsäure oder Estern davon und Ethylenglykol einer Veresterungsreaktion,
Unterziehen des Reaktionsprodukts dieser Veresterungsreaktion einer Polykondensationsreaktion in Gegenwart von Antimon (Sb)-Verbindungen und/oder Magnesium (Mg)-Verbindungen als Katalysator in einer durch die folgenden Formeln (4)-(6) definierten Menge:

$$0 \leq Sb \leq 1,5 \qquad (4)$$

$$0 \leq Mg \leq 10 \qquad (5)$$

$$0,5 \leq 6Sb + Mg \leq 15 \qquad (6)$$

worin Sb die Gesamtmolanzahl an Antimonverbindungen pro $10^6$ Gramm des Polyesters und Mg die Gesamtmolanzahl an Magnesiumverbindungen pro $10^6$ Gramm des Polyesters sind, und
Zugeben der sphärischen Siliciumoxidteilchen bei einer beliebigen Stufe, bis die anfängliche Polykondensationsreaktion vervollständigt ist, das heißt bei einer Stufe, bei welcher die Grenzviskosität des Reaktionsprodukts 0,2 oder niedriger ist, in einer Menge von 0,001 bis 5 Gew.-%, bezogen auf den herzustellenden Polyester, wobei die Teilchen amorph sind, durch Unterziehen eines Alkoxysilans der Hydrolysereaktion und Kondensationsreaktion in Gegenwart eines Katalysators vom Amin-Typ erhalten worden sind und einen Durchschnittsdurchmesser von 0,01 bis 3,0 µm besitzen, und wobei der Durchmesser-Dispersionsindex dieser Teilchen, wie durch die folgende Formel (1) angegeben, im Bereich von 1,1 bis 2,7 liegt:

$$d_{10}/d_{90} \qquad (1)$$

worin $d_{10}$ der Durchmesser des Teilchens ist, wenn dessen Summenanzahl 10% der Gesamtanzahl der Teilchen ausmacht, $d_{90}$ der Durchmesser des Teilchens ist, wenn dessen Summenanzahl 90 % der Gesamtanzahl der Teilchen ausmacht, und wobei $d_{10}$ und $d_{90}$ unter einem Elektronenmikroskop gemessen werden, wobei die Summenanzahlen in der Weise berechnet werden, daß mit der größten Teilchengröße begonnen wird.

2. Verfahren zur Herstellung einer Polyesterzusammensetzung nach Anspruch 1, wobei die feinen sphärischen Siliciumoxidteilchen 90 Gew.-% oder mehr Siliciumdioxid umfassen.

3. Polyesterfolie, bestehend aus der gemäß den Ansprüchen 1 oder 2 hergestellten Polyesterzusammensetzung.

4. Polyesterfolie nach Anspruch 3, welche zusätzlich zu den sphärischen Siliciumoxidteilchen (nachfolgend als Teilchen (A) bezeichnet) 0,005 bis 1,0 Gew.-% Teilchen (B-1), welche von den Siliciumoxidteilchen (A) verschieden sind, enthält, wobei das Verhältnis $(D_2/D_1)$ im Bereich von 1,1 bis 3,0 liegt,

worin $D_2$ der Durchschnittsdurchmesser der Teilchen (B-1) und $D_1$ der Durchschnittsdurchmesser der Teilchen (A) ist, wobei die Mohs-Härte der Teilchen (B-1) 4,0 oder weniger beträgt.

5. Verwendung der Polyesterfolie nach Anspruch 3 oder 4 für magnetische Aufzeichnungsmedien oder Kondensatoren.

**Revendications**
**Revendications pour les Etats contractants suivants : AT, BE, CH, ES, GR, IT, LI, LU, NL, SE**

1. Procédé de préparation d'une composition de polyester, dans laquelle 80 % en moles ou plus des motifs structuraux répétitifs du polyester sont constitués de motifs téréphtalate d'éthylène ou de motifs 2,6-naphtalate d'éthylène et contenant des particules sphériques de silice, qui comprend les étapes consistant à:

soumettre l'acide téréphtalique ou l'acide 2,6-naphtalènedicarboxylique, ou leurs esters, et l'éthylèneglycol à une réaction d'estérification,

soumettre le produit obtenu lors de ladite réaction d'estérification à une réaction de polycondensation, en présence de composés d'antimoine (Sb) et/ou de magnésium (Mg) comme catalyseur en une proportion définie par les formules (4) à (6) suivantes:

$$0 \leq Sb \leq 1,5 \qquad (4)$$

$$0 \leq Mg \leq 10 \qquad (5)$$

$$0,5 \leq 6 \; Sb \; + \; Mg \leq 15 \qquad (6),$$

dans lesquelles Sb représente le nombre total de moles de composés d'antimoine pour $10^6$ grammes du polyester, et Mg représente le nombre total de moles de composés de magnésium pour $10^6$ grammes du polyester, et

ajouter lesdites particules sphériques de silice à n'importe quel stade jusqu'à la fin de la polycondensation initiale, c'est-à-dire à un stade où la viscosité intrinsèque du produit réactionnel est égale ou inférieure à 0,2, à raison de 0,001 à 5 % en poids par rapport au polyester à produire, lesdites particules, qui sont amorphes, étant obtenues par hydrolyse et condensation d'un alcoxysilane, en présence d'un catalyseur de type amine, et présentant un diamètre moyen de 0,01 à 3,0 $\mu$m, l'indice de dispersion des diamètres desdites particules, représenté par la formule suivante (I), se situant dans l'intervalle compris entre 1,1 et 2,7:

$$d_{10}/d_{90} \qquad (I),$$

où $d_{10}$ est le diamètre de la particule quand le nombre cumulé des particules représente 10 % du nombre total desdites particules, $d_{90}$ est le diamètre de la particule quand le nombre cumulé des particules représente 90 % du nombre total desdites particules, et $d_{10}$ et $d_{90}$ sont mesurés sous un microscope électronique, lesdits nombres cumulés étant calculés en commençant par les particules de taille la plus grande.

2. Procédé de préparation d'une composition de polyester selon la revendication 1, dans laquelle les fines particules sphériques de silice comprennent 90 % en poids ou plus de dioxyde de silicium.

3. Film de polyester qui contient 0,001 à 5 % en poids, par rapport au polyester, de particules sphériques de silice, dans lequel lesdites particules de silice ont été obtenues par hydrolyse et condensation d'un alcoxysilane en présence d'un catalyseur de type amine, lesdites particules de silice étant amorphes et présentant un diamètre moyen de 0,01 à 3,0 $\mu$m et un indice de dispersion des diamètres desdites particules, représenté par la formule suivante (I), qui se situe dans l'intervalle compris entre 1,1 et 2,7:

$$d_{10}/d_{90} \qquad (I),$$

où $d_{10}$ est le diamètre de la particule quand le nombre cumulé des particules représente 10 % du nombre total desdites particules, $d_{90}$ est le diamètre de la particule quand le nombre cumulé des particules représente 90 % du nombre total desdites particules, et $d_{10}$ et $d_{90}$ sont mesurés sous un microscope électronique, lesdits nombres cumulés étant calculés en commençant par les particules de taille la plus grande.

**4.** Film de polyester selon la revendication 3, qui contient, en plus des particules sphériques de silice (désignées dans ce qui suit par "particules A"), 0,005 à 1,0 % en poids de particules B-1 autres que les particules A, le rapport $D_2/D_1$ ci-dessous se situant dans l'intervalle allant de 1,1 à 3,0:

$$D_2/D_1 = \frac{\text{diamètre moyen des fines particules B-1}}{\text{diamètre moyen des fines particules A}} \quad ,$$

où $D_2$ représente le diamètre moyen des particules B-1 et $D_1$ représente le diamètre moyen des particules A, la dureté Mohs desdites particules B-1 ayant une valeur égale ou inférieure à 4,0.

**5.** Utilisation du film de polyester de l'une des revendications 3 ou 4 pour des supports d'enregistrement magnétique ou des condensateurs.

**Revendications pour les Etats contractants suivants : DE, FR, GB**

**1.** Procédé de préparation d'une composition de polyester, dans laquelle 80 % en moles ou plus des motifs structuraux répétitifs du polyester sont constitués de motifs téréphtalate d'éthylène ou de motifs 2,6-naphtalate d'éthylène et contenant des particules sphériques de silice, qui comprend les étapes consistant à:

soumettre l'acide téréphtalique ou l'acide 2,6-naphtalènedicarboxylique, ou leurs esters, et l'éthylèneglycol à une réaction d'estérification,

soumettre le produit obtenu lors de ladite réaction d'estérification à une réaction de polycondensation, en présence de composés d'antimoine (Sb) et/ou de magnésium (Mg) comme catalyseur en une proportion définie par les formules (4) à (6) suivantes:

$$0 \leqq Sb \leqq 1,5 \quad (4)$$

$$0 \leqq Mg \leqq 10 \quad (5)$$

$$0,5 \leqq 6\,Sb + Mg \leqq 15 \quad (6),$$

dans lesquelles Sb représente le nombre total de moles de composés d'antimoine pour $10^6$ grammes du polyester, et Mg représente le nombre total de moles de composés de magnésium pour $10^6$ grammes du polyester, et

ajouter lesdites particules sphériques de silice à n'importe quel stade jusqu'à la fin de la polycondensation initiale, c'est-à-dire à un stade où la viscosité intrinsèque du produit réactionnel est égale ou inférieure à 0,2, à raison de 0,001 à 5 % en poids par rapport au polyester à produire, lesdites particules, qui sont amorphes, étant obtenues par hydrolyse et condensation d'un alcoxysilane en présence d'un catalyseur de type amine et présentant un diamètre moyen de 0,01 à 3,0 $\mu$m, l'indice de dispersion des diamètres desdites particules, représenté par la formule suivante (I), se situant dans l'intervalle compris entre 1,1 et 2,7:

$$d_{10}/d_{90} \quad (I),$$

où $d_{10}$ est le diamètre de la particule quand le nombre cumulé des particules représente 10 % du nombre total desdites particules, $d_{90}$ est le diamètre de la particule quand le nombre cumulé des particules représente 90 % du nombre total desdites particules, et $d_{10}$ et $d_{90}$ sont mesurés sous un microscope électronique, lesdits nombres cumulés étant calculés en commençant par les particules de taille la plus grande.

**2.** Procédé de préparation d'une composition de polyester selon la revendication 1, dans laquelle les fines particules sphériques de silice comprennent 90 % en poids ou plus de dioxyde de silicium.

**3.** Film de polyester comprenant la composition de polyester préparée selon la revendication 1 ou 2.

**4.** Film de polyester selon la revendication 3, qui contient, en plus des particules sphériques de silice (désignées dans ce qui suit par "particules A"), 0,005 à 1,0 % en poids de particules B-1 autres que les particules A, le rapport $D_2/D_1$ se situant dans l'intervalle allant de 1,1 à 3,0, rapport dans lequel $D_2$ représente le diamètre moyen des particules B-1 et $D_1$ représente le diamètre moyen des particules A, la dureté Mohs desdites particules B-1 ayant une valeur égale ou inférieure à 4,0.

**5.** Utilisation du film de polyester de l'une des revendications 3 ou 4 pour des supports d'enregistrement magnétique ou des condensateurs.

# Fig.1

$N_2$ gas

# Fig.2

# Fig.3

# Fig.4